# EUROPEAN PATENT APPLICATION

(11) **EP 4 641 819 A1**
(43) Date of publication of application: **29.10.2025**
(21) Application number: 23907002.2
(22) Date of filing: 19.12.2023
(51) Int. Cl.: H01M 50/562, H01M 50/55, H01M 50/533, H01M 50/534, H01M 50/553, H01M 50/567

(54) **BATTERY TERMINAL, MANUFACTURING METHOD FOR BATTERY TERMINAL, BATTERY, AND MANUFACTURING METHOD FOR BATTERY**

(30) Priority: 20.12.2022 JP 2022203656
(71) Applicant: Proterial, Ltd., Tokyo 135-0061 (JP)
(72) Inventor: KITAGAWA, Takao, Suita-shi, Osaka 564-0043 (JP); ODA, Yoshimitsu, Suita-shi, Osaka 564-0043 (JP); YOKOYAMA, Shinichiro, Tokyo 135-0061 (JP)
(74) Representative: Hoffmann Eitle
(86) International application number: PCT/JP2023/045393
(87) International publication number: WO 2024/135642

(57) **Abstract**

A negative electrode terminal (battery terminal) (10) includes a flange (12) in which an Al layer (41) made of an Al alloy containing a highest content of Al and a second highest content of Mn or Mg and having a conductivity of 30% IACS or more, and a Cu layer (42) made of Cu are diffusion bonded to each other in a stacking direction, a shaft (11) extending from the flange in the stacking direction of the Al layer and the Cu layer, and a recess (13) at an end of the shaft on a side of the Cu layer, including a surface composed of the Cu layer.

## Description

### Technical Field

The present invention relates to a battery terminal, a method for manufacturing a battery terminal, a battery, and a method for manufacturing a battery, and more particularly, it relates to a battery terminal including a recess, a method for manufacturing a battery terminal, a battery, and a method for manufacturing a battery.

### Background Art

Conventionally, a battery terminal including a recess is known. Such a battery terminal is disclosed in Japanese Patent No. 6581440, for example.

Japanese Patent No. 6581440 discloses a battery terminal made of a clad material in which a first metal layer (Al layer) made of pure Al and a second metal layer (Cu layer) made of pure Cu are bonded to each other, and the battery terminal includes a shaft, a flange, and a recess provided at a distal end of the shaft. In Patent Document 1, the clad material is pressed in the stacking direction from the Al layer side to the Cu layer side such that the shaft and the recess including surfaces composed of the Cu layer are formed.

### Prior Art Document

### Patent Document

Patent Document 1: Japanese Patent No. 6581440

### Summary of the Invention

### Problem to be Solved by the Invention

Although not disclosed in Japanese Patent No. 6581440, from the viewpoint of press workability, the clad material may be annealed before press working in order to soften pure Cu, which is harder than pure Al. At this time, the softening temperatures of pure Al and pure Cu are close to each other, and thus the pure Al is also softened by annealing the pure Cu. When the clad material in which the Al layer made of pure Al and the Cu layer made of pure Cu are softened by annealing is pressed to form the shaft and the recess including the surfaces composed of the Cu layer, the press workability is good because the Al layer is softened together with the Cu layer, but depending on the dimensions and shape of the terminal, the Al layer, which is softer than the Cu layer, may be elongated more than the Cu layer. The Al layer elongated more than the Cu layer may break through the Cu layer and be exposed to the surface at a portion, the surface of which needs to be composed of a Cu layer, especially at a side wall of the recess that becomes thin. For example, when the Al layer is exposed on the surface of the side wall of the recess, and the side wall (swaged portion) of the recess is expanded and swaged to the battery, the electrolyte may contact the Al layer exposed on the surface of the side wall of the recess. When the Al layer melts in the recess swaged to the battery, the melted portion may create a gap that makes it difficult for electricity to flow, and this may result in a deterioration in the electrical characteristics of the battery.

The present invention is intended to solve the above problem. The present invention aims to provide a battery terminal in which exposure of an Al layer to a portion (particularly a thinned side wall of a recess), the surface of which needs to be composed of a Cu layer, can be reduced or prevented while the electrical characteristics of a battery are maintained.

### Means for Solving the Problem

In order to attain the aforementioned object, a battery terminal according to a first aspect of the present invention includes a flange in which an Al layer made of an Al alloy containing a highest content of Al and a second highest content of Mn or Mg and having a conductivity of 30% IACS or more, and a Cu layer made of Cu are diffusion bonded to each other in a stacking direction, a shaft extending from the flange in the stacking direction of the Al layer and the Cu layer, and a recess at an end of the shaft on a side of the Cu layer, including a surface composed of the Cu layer.

In the battery terminal according to the first aspect of the present invention, as described above, the Al layer made of the Al alloy containing the highest content of Al and the second highest content of Mn or Mg and having a conductivity of 30% IACS or more, and the Cu layer made of Cu are diffusion bonded to each other in the stacking direction. The hardness of the Al layer made of the Al alloy containing Mn or Mg is larger than that of an Al layer made of pure Al. Thus, a decrease in the hardness of the Al layer when the Cu layer made of Cu is softened by annealing can be reduced or prevented as compared with the Al layer made of pure Al. When a step of press working is performed after annealing, the hardness of the Al layer made of the Al alloy containing Mn or Mg after annealing is larger than that of the Al layer made of pure Al, and thus the possibility that the Al layer is excessively elongated can be reduced or prevented. Therefore, the possibility that the Al layer breaks through the Cu layer that a surface of a side wall of the recess is composed of and is exposed on the surface of the side wall of the recess can be reduced or prevented. With this configuration, exposure of the Al layer on the surface of the recess can be reduced or prevented, and thus formation of a gap in the recess due to dissolution of the Al layer caused by contact of the Al layer with an electrolyte at the recess that is swaged to a battery can be reduced or prevented. Consequently, a deterioration in the electrical characteristics of the battery can be reduced or prevented. Furthermore, the conductivity is 30% IACS or more, and thus the conductivity required to function as the battery terminal can be ensured. In this respect, the electrical characteristics of the battery can be maintained. Consequently, it is possible to provide the battery terminal in which exposure of the Al layer to a portion (particularly the thinned side wall of the recess), the surface of which needs to be composed of the Cu layer, is reduced or prevented while the electrical characteristics of the battery are maintained.

In the battery terminal according to the first aspect, the Al alloy preferably has a conductivity of 40% IACS or more. Accordingly, the conductivity required to function as the battery terminal can be sufficiently ensured.

In the battery terminal according to the first aspect, the Al alloy preferably contains the highest content of Al and the second highest content of Mn. The Al layer made of the Al alloy containing the highest content of Al and the second highest content of Mn has a lower hardness than an Al layer made of an Al alloy containing the highest content of Al and the second highest content of Mg. Therefore, a decrease in the hardness of the Al layer made of the Al alloy containing the highest content of Al and the second highest content of Mn due to annealing can be reduced or prevented as compared with the Al layer made of pure Al, as described above, while a decrease in the hardness the Al layer made of the Al alloy containing the highest content of Al and the second highest content of Mn due to annealing can be increased as compared with the Al layer made of the Al alloy containing the highest content of Al and the second highest content of Mg. Thus, the possibility that the Al layer made of the Al alloy containing the highest content of Al and the second highest content of Mn is elongated more than the Cu layer can be reduced or prevented as compared with the Al layer made of pure Al, and the press workability can be improved as compared with the Al layer made of the Al alloy containing the highest content of Al and the second highest content of Mg. The inventors of the present application have learned the above points through examples (simulations) described below. In addition, the Al layer made of the Al alloy containing the second highest content of Mn has a higher conductivity than the Al alloy containing the second highest content of Mg, and thus the conductivity required to function as the battery terminal can be sufficiently ensured. In this respect, the electrical characteristics of the battery can be maintained.

A method for manufacturing a battery terminal according to a second aspect of the present invention includes preparing a clad material by diffusion bonding an Al layer made of an Al alloy containing a highest content of Al and a second highest content of Mn or Mg and having a conductivity of 30% IACS or more and a Cu layer made of Cu to each other in a stacking direction, tempering the clad material into a press blank that is a material to be pressed, in which the Al layer having a Vickers hardness of 30 HV or more and the Cu layer having a Vickers hardness of 50 HV or more and 80 HV or less are diffusion bonded to each other in the stacking direction, and pressing the press blank to form a flange, a shaft extending from the flange in the stacking direction of the Al layer and the Cu layer, and a recess at an end of the shaft on a side of the Cu layer, including a surface composed of the Cu layer.

As described above, the method for manufacturing a battery terminal according to the second aspect of the present invention includes the preparing the clad material in which the Al layer made of the Al alloy containing the highest content of Al and the second highest content of Mn or Mg and having a conductivity of 30% IACS or more, and the Cu layer made of Cu are diffusion bonded to each other in the stacking direction. Accordingly, the Vickers hardness of the Al layer is 30 HV or more, and thus the inventors of the present application have learned through examples (simulations) described below that the possibility that the Al layer breaks through the Cu layer that a surface of a side wall of the recess is composed of and is exposed on the surface of the side wall of the recess can be reduced or prevented. Thus, exposure of the Al layer on the surface of the side wall of the recess can be reduced or prevented, and thus formation of a gap in the Al layer caused by contact of an electrolyte with the exposed Al layer can be reduced or prevented.
Consequently, a deterioration in the electrical characteristics of the battery can be reduced or prevented. In addition, the conductivity is 30% IACS or more, and thus the conductivity required to function as the battery terminal can be ensured. In this respect, the electrical characteristics of the battery can be maintained. Consequently, it is possible to manufacture the battery terminal in which exposure of the Al layer to a portion (particularly the thinned side wall of the recess), the surface of which needs to be composed of the Cu layer, is reduced or prevented while the electrical characteristics of the battery are maintained.

In the method for manufacturing a battery terminal according to the second aspect, the tempering the clad material into the press blank preferably includes tempering the Al layer to have a Vickers hardness of 30 HV or more and 75 HV or less, and tempering the Cu layer to have a Vickers hardness of 50 HV or more and 80 HV or less. Accordingly, the inventors of the present application have learned through the examples (simulations) described below that the possibility that the Al layer breaks through the Cu layer that the surface of the side wall of the recess is composed of and is exposed on the surface of the side wall of the recess during press working can be reduced or prevented.

In the method for manufacturing a battery terminal according to the second aspect, the preparing the clad material preferably includes preparing the clad material by diffusion bonding the Al layer made of the Al alloy having a conductivity of 40% IACS or more and the Cu layer made of Cu to each other in the stacking direction. Accordingly, the Al layer is made of the Al alloy having a conductivity of 40% IACS or more, and thus the electrical characteristics of the battery can be improved as compared with a case of an Al layer made of an Al alloy having a conductivity of 30% IACS or more and less than 40% IACS.

A battery according to a third aspect of the present invention includes a battery terminal including a flange in which an Al layer made of an Al alloy containing a highest content of Al and a second highest content of Mn or Mg and having a conductivity of 30% IACS or more, and a Cu layer made of Cu are diffusion bonded to each other in a stacking direction, a shaft extending from the flange in the stacking direction of the Al layer and the Cu layer, and a recess at an end of the shaft on a side of the Cu layer, including a surface composed of the Cu layer, an electrolyte, a housing to store the electrolyte, a positive electrode component included in a positive electrode side of the battery, a negative electrode component included in a negative electrode side of the battery, and a separator to separate a positive electrode from a negative electrode of the battery. The recess of the battery terminal is swaged and fixed to the negative electrode component.

As described above, the battery according to the third aspect of the present invention includes the battery terminal, the electrolyte, the housing to store the electrolyte, the positive electrode component included in the positive electrode side of the battery, the negative electrode component included in the negative electrode side of the battery, and the separator to separate the positive electrode from the negative electrode of the battery. In the battery terminal, the Al layer made of the Al alloy containing the highest content of Al and the second highest content of Mn or Mg and having a conductivity of 30% IACS or more, and the Cu layer made of Cu are diffusion bonded to each other in the stacking direction, and the recess is swaged and fixed to the negative electrode component of the battery. As described above, in the battery terminal, exposure of the Al layer on a surface of a side wall of the recess is reduced or prevented while the electrical characteristics of the battery are maintained, and thus dissolution of the Al layer caused by contact of the Al layer with the electrolyte at the recess of the battery terminal that is swaged to the negative electrode component of the battery can be reduced or prevented. Consequently, a deterioration in the electrical characteristics of the battery due to formation of a gap in the recess of the battery terminal can be reduced or prevented. In addition, the conductivity is 30% IACS or more, and thus the conductivity required to function as the battery terminal can be ensured. In this respect, the electrical characteristics of the battery can be maintained. By using the battery terminal in which exposure of the Al layer to a portion (particularly the thinned side wall of the recess), the surface of which needs to be made of the Cu layer, is reduced or prevented, it is possible to provide the battery in which a deterioration in the electrical characteristics caused by the battery terminal is reduced or prevented while the electrical characteristics of the battery are maintained.

A method for manufacturing a battery according to a fourth aspect of the present invention is a method for manufacturing a battery including a battery terminal including a flange in which an Al layer made of an Al alloy containing a highest content of Al and a second highest content of Mn or Mg and having a conductivity of 30% IACS or more, and a Cu layer made of Cu are diffusion bonded to each other in a stacking direction, a shaft extending from the flange in the stacking direction of the Al layer and the Cu layer, and a recess at an end of the shaft on a side of the Cu layer, including a surface composed of the Cu layer, an electrolyte, a housing to store the electrolyte, a positive electrode component included in a positive electrode side of the battery, a negative electrode component included in a negative electrode side of the battery, and a separator to separate a positive electrode from a negative electrode of the battery, and the method includes swaging and fixing the recess of the battery terminal to the negative electrode component.

In the method for manufacturing the battery according to the fourth aspect of the present invention, as described above, the battery terminal is used, which includes the flange in which the Al layer made of the Al alloy containing the highest content of Al and the second highest content of Mn or Mg and having a conductivity of 30% IACS or more, and the Cu layer made of Cu are diffusion bonded to each other in the stacking direction, the shaft extending from the flange in the stacking direction of the Al layer and the Cu layer, and the recess at the end of the shaft on the side of the Cu layer, including the surface composed of the Cu layer. Furthermore, the method for manufacturing the battery includes the swaging and fixing the recess of the battery terminal to the negative electrode component. As described above, in the battery terminal, exposure of the Al layer on a surface of a side wall of the recess is reduced or prevented while the electrical characteristics of the battery are maintained, and thus the recess of the battery terminal is swaged and fixed to the negative electrode component of the battery such that dissolution of the Al layer caused by contact of the Al layer with the electrolyte at the recess of the battery terminal can be reduced or prevented. Consequently, a deterioration in the electrical characteristics of the battery due to formation of a gap in the recess of the battery terminal can be reduced or prevented. In addition, the conductivity is 30% IACS or more, and thus the conductivity required to function as the battery terminal can be ensured. In this respect, the electrical characteristics of the battery can be maintained. By using the battery terminal in which exposure of the Al layer to a portion (particularly the thinned side wall of the recess), the surface of which needs to be composed of the Cu layer, is reduced or prevented, it is possible to manufacture the battery in which a deterioration in the electrical characteristics caused by the battery terminal is reduced or prevented while the electrical characteristics of the battery are maintained. Advantageous Effect of the Invention

According to the present invention, it is possible to provide the battery terminal in which exposure of the Al layer to the portion (particularly the thinned side wall of the recess), the surface of which needs to be composed of the Cu layer, is reduced or prevented while the electrical characteristics of the battery are maintained.

### Brief Description of the Drawings

FIG. 1 is a diagram showing an assembled battery according to an embodiment of the present invention.
FIG. 2 is a diagram showing an example of a single battery according to the embodiment of the present invention.
FIG. 3 is an exploded perspective view of the single battery in FIG. 2.
FIG. 4 is a diagram showing a clad material of a battery terminal (negative electrode terminal) according to the embodiment of the present invention.
FIG. 5 is a diagram showing the battery terminal (negative electrode terminal) according to the embodiment of the present invention.
FIG. 6 is a diagram showing a state in which the battery terminal (negative electrode terminal) according to the embodiment of the present invention is swaged and fixed.
FIG. 7 is a diagram for illustrating a method for manufacturing the battery terminal (negative electrode terminal) according to the embodiment of the present invention.
FIG. 8 is a diagram for illustrating a process to press a press blank according to the embodiment of the present invention.
FIG. 9 is a diagram showing the cross-sections of clad materials and first molded bodies at the time of first press working in a CAE simulation, cut in a Z direction along the central axis.
FIG. 10 is a diagram showing the cross-sections of the first molded bodies and second molded bodies at the time of second press working in the CAE simulation, cut in the Z direction along the central axis.
FIG. 11 is a diagram showing the cross-sections of the second molded bodies and third molded bodies at the time of third press working in the CAE simulation, cut in the Z direction along the central axis.
FIG. 12 is partial enlarged views of the third molded bodies shown in FIG. 11.
FIG. 13 is a diagram (photograph) showing the cross-section of a battery terminal (negative electrode terminal) actually formed by pressing a clad material corresponding to Comparative Example of the CAE simulation and cut in the Z direction along the central axis.
FIG. 14 is a diagram showing positions (ten positions P1 to P10) of the third molded body of Example 1 at which the Vickers hardness is obtained by the CAE simulation.
FIG. 15 is a diagram showing positions (ten positions P1 to P10) of the third molded body of Example 2 at which the Vickers hardness is obtained by the CAE simulation.
FIG. 16 is a diagram showing positions (ten positions P1 to P10) of the third molded body of Comparative Example at which the Vickers hardness is obtained by the CAE simulation.
FIG. 17 is a diagram showing a clad material before molding and a battery terminal after molding in another CAE simulation.
FIG. 18 is a diagram showing the results of the CAE simulation.
FIG. 19 is a diagram (photograph) showing a battery terminal of Example 1 and a battery terminal of Comparative Example 1.
FIG. 20 is a diagram (photograph) showing the cross-section of the battery terminal of Example 1.
FIG. 21 is a diagram (photograph) showing a first sample of the battery terminal of Example 1 that was actually produced.
FIG. 22 is a diagram (photograph) showing a second sample of the battery terminal of Example 1 that was actually produced.
FIG. 23 is a diagram (photograph) showing a third sample of the battery terminal of Example 1 that was actually produced.
FIG. 24 is a diagram (photograph) showing a fourth sample of the battery terminal of Example 1 that was actually produced.
FIG. 25 is a diagram (photograph) showing a fifth sample of the battery terminal of Example 1 that was actually produced.
FIG. 26 is a diagram (photograph) showing a sixth sample of the battery terminal of Example 1 that was actually produced.
FIG. 27 is a diagram (photograph) showing a seventh sample of the battery terminal of Example 1 that was actually produced.
FIG. 28 is a diagram (photograph) showing an eighth sample of the battery terminal of Example 1 that was actually produced.
FIG. 29 is a diagram (photograph) showing a ninth sample of the battery terminal of Example 1 that was actually produced.
FIG. 30 is a diagram (photograph) showing a tenth sample of the battery terminal of Example 1 that was actually produced.
FIG. 31 is a diagram (photograph) showing the cross-section of the battery terminal of Comparative Example 1.
FIG. 32 is a diagram (photograph) showing a first sample of the battery terminal of Comparative Example 1 that was actually produced.
FIG. 33 is a diagram (photograph) showing a second sample of the battery terminal of Comparative Example 1 that was actually produced.
FIG. 34 is a diagram (photograph) showing a third sample of the battery terminal of Comparative Example 1 that was actually produced.
FIG. 35 is a diagram (photograph) showing a fourth sample of the battery terminal of Comparative Example 1 that was actually produced.
FIG. 36 is a diagram (photograph) showing a fifth sample of the battery terminal of Comparative Example 1 that was actually produced.
FIG. 37 is a diagram (photograph) showing a sixth sample of the battery terminal of Comparative Example 1 that was actually produced.
FIG. 38 is a diagram (photograph) showing a seventh sample of the battery terminal of Comparative Example 1 that was actually produced.
FIG. 39 is a graph showing the relationship between the Cu thicknesses and Al elongations of the first to tenth samples of Example 1.
FIG. 40 is a graph showing the relationship between the Cu thicknesses and Al elongations of the first to seventh samples of Comparative Example.

### Modes for Carrying Out the Invention

An embodiment of the present invention is hereinafter described on the basis of the drawings.

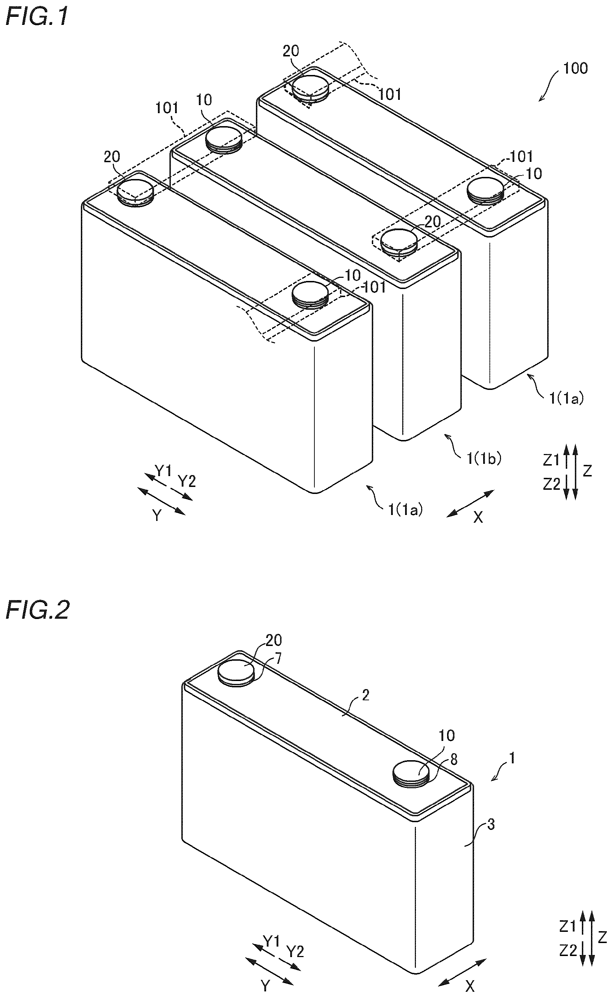

As shown in FIG. 1, an assembled battery 100 according to the embodiment of the present invention is configured by electrically connecting a plurality of lithium-ion batteries 1 by a plurality of flat plate-shaped bus bars 101 (shown by dotted lines). The assembled battery 100 is a large battery system that is mounted, for example, on an electric vehicle (EV) or a hybrid electric vehicle (HEV). The lithium-ion battery 1 is an example of a "battery" in the claims.

In the assembled battery 100, the plurality of lithium-ion batteries 1 are aligned along the short-side direction (X direction) of the lithium-ion batteries 1 a viewed in a plan view from a first side (upper side, Z1 side) in an upward-downward direction (Z direction). Furthermore, in the assembled battery 100, lithium-ion batteries 1 (1a) and lithium-ion batteries 1 (1b) are alternately arranged along the short-side direction (X direction). In the lithium-ion batteries 1 (1a), positive electrode terminals 20 are located on a first side (Y1 side) in a longitudinal direction (Y direction) perpendicular to the X direction while negative electrode terminals 10 are located on a second side (Y2 side) in the Y direction. In the lithium-ion batteries 1 (1b), positive electrode terminals 20 are located on the Y2 side while negative electrode terminals 10 are located on the Y1 side. Each negative electrode terminal 10 is one of negative electrode components that constitute the negative electrode side of the battery, and each positive electrode terminal 20 is one of positive electrode components that constitute the positive electrode side of the battery.

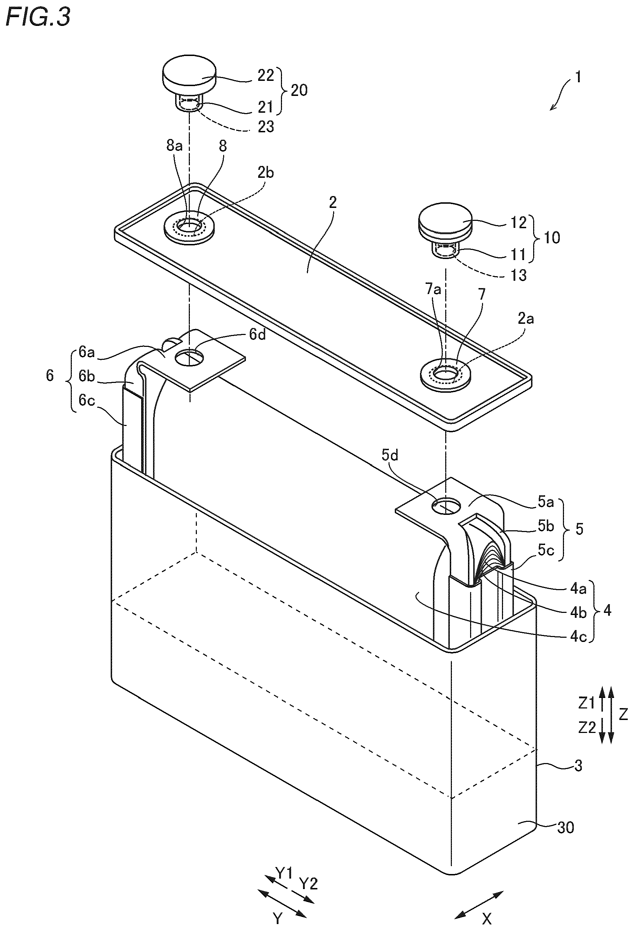

As shown in FIGS. 2 and 3, each of the lithium-ion batteries 1 has a substantially rectangular parallelepiped appearance. The lithium-ion battery 1 includes a lid member 2 arranged on the Z1 side in the Z direction perpendicular to the X and Y directions, and a tank member 3 arranged on a second side (lower side, Z2 side) in the Z direction. The lid member 2 and the tank member 3 define a housing for the lithium-ion battery 1. Depending on the design plan of the insulation structure between the positive electrode side and the negative electrode side, the lid member 2 and the tank member 3 that define the housing for the battery can be one of the negative electrode components that constitute the negative electrode side of the battery, or one of the positive electrode components that constitute the positive electrode side of the battery. The lid member 2 and the tank member 3 are examples of a "housing" in the claims.

The tank member 3 has a substantially rectangular parallelepiped shape, as shown in FIG. 3. The tank member 3 stores an electrolyte 30. The lid member 2 has a flat plate shape, as shown in FIG. 3. The lid member 2 includes a pair of insertion holes 2a and 2b penetrating in the Z direction. The pair of insertion holes 2a and 2b are formed in the lid member 2 at a predetermined interval in the Y direction and are formed in a substantially central portion of the lid member 2 in the X direction. The negative electrode terminal 10 and the positive electrode terminal 20 are inserted into and fixed to the pair of insertion holes 2a and 2b, respectively. The negative electrode terminal 10 is an example of a "battery terminal" in the claims.

The lithium-ion battery 1 includes a power generation element 4 in which a positive electrode 4a, a negative electrode 4b, and a separator 4c are laminated in a roll shape. The positive electrode 4a is made of an Al foil coated with a positive electrode active material. The negative electrode 4b is made of a Cu foil coated with a negative electrode active material. The separator 4c has a function of isolating and insulating the positive electrode 4a from the negative electrode 4b of the battery.

The lithium-ion battery 1 includes a negative electrode current collector 5 that electrically connects the negative electrode terminal 10 to the negative electrode 4b of the power generation element 4, and a positive electrode current collector 6 that electrically connects the positive electrode terminal 20 to the positive electrode 4a of the power generation element 4. The negative electrode current collector 5 is disposed on the Y2 side so as to correspond to the negative electrode terminal 10. The negative electrode current collector 5 includes a connector 5a including a hole 5d into which the negative electrode terminal 10 is inserted, a leg 5b extending to the Z2 side, and a connection plate 5c that connects the leg 5b to a plurality of negative electrodes 4b. The negative electrode current collector 5 is made of Cu, similarly to the negative electrode 4b. The negative electrode 4b, the negative electrode current collector 5, the connector 5a, the leg 5b, and the connection plate 5c are each one of the negative electrode components that constitute the negative electrode side of the battery, and are examples of a "negative electrode component" in the claims.

The positive electrode current collector 6 is disposed on the Y1 side so as to correspond to the positive electrode terminal 20. The positive electrode current collector 6 includes a connector 6a including a hole 6d into which the positive electrode terminal 20 is inserted, a leg 6b extending to the Z2 side, and a connection plate 6c that connects the leg 6b to a plurality of positive electrodes 4a. The positive electrode current collector 6 is made of Al, similarly to the positive electrode 4a. The positive electrode 4a, the positive electrode current collector 6, the connector 6a, the leg 6b, and the connection plate 6c are each one of the positive electrode components that constitute the positive electrode side of the battery, and are examples of a "positive electrode component" in the claims.

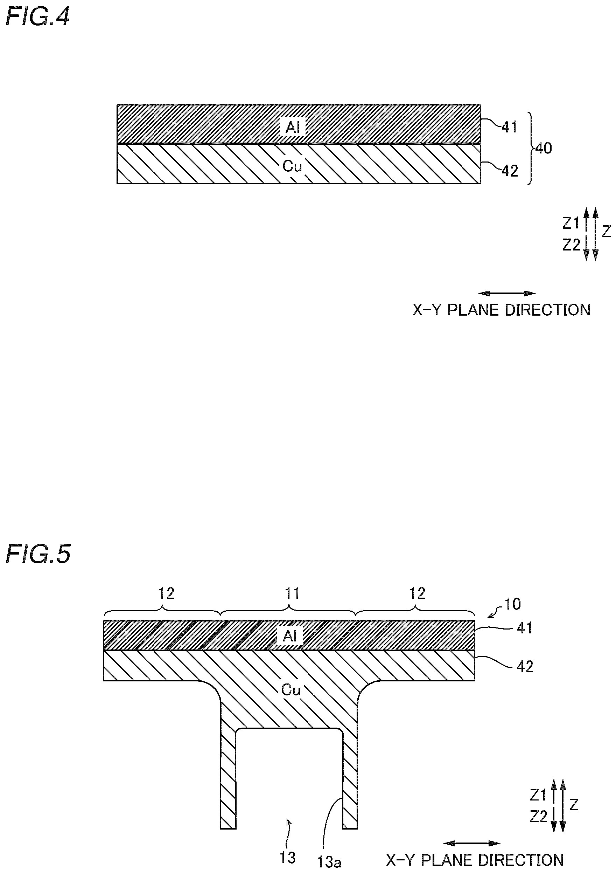

The negative electrode terminal 10 is made of a clad material 40 in which an Al layer 41 and a Cu layer 42 are bonded to each other by rolling them in a stacked state, as shown in FIG. 4. The negative electrode terminal 10 includes a flange 12, a shaft 11 extending from the flange 12 to the Z2 side in the stacking direction (Z direction) of the Al layer 41 and the Cu layer 42, and a recess 13 located at an end of the shaft 11 on the Cu layer 42 side (Z2 side) and including a surface composed of the Cu layer 42, as shown in FIG. 5.

The Al layer 41 is made of an Al alloy. The Al alloy has a composition equivalent to an Al-Mn alloy in No. A3000s containing the highest content of Al and the second highest content of Mn among alloys described in JIS-H4000: 2014, or has a composition equivalent to an Al-Mg alloy in No. A5000s containing the highest content of Al and the second highest content of Mg among the alloys described in JIS-H4000: 2014.

The Al alloys in No. A3000s include A3003 or A3004. The Al alloys in No. A5000s include A5005, A5052, A5086, A5154, or A5454. The Al alloys in No. A3000s tend to have lower Vickers hardness than the Al alloys in No. A5000s. The Al alloys in No. A3000s tend to have a higher conductivity than the Al alloys in No. A5000s.

The conductivity of the Al layer 41 is 30% IACS or more, and preferably 40% IACS. IACS is expressed as a ratio when the volume resistivity of annealed standard soft copper, 1.7241 × 10⁻² µΩm, is defined as 100 IACS%.

Cu of the Cu layer 42 has a composition equivalent to pure copper in No. C1000s containing 99.9 mass % or more of Cu. The conductivity of the Cu layer 42 is about 100% IACS.

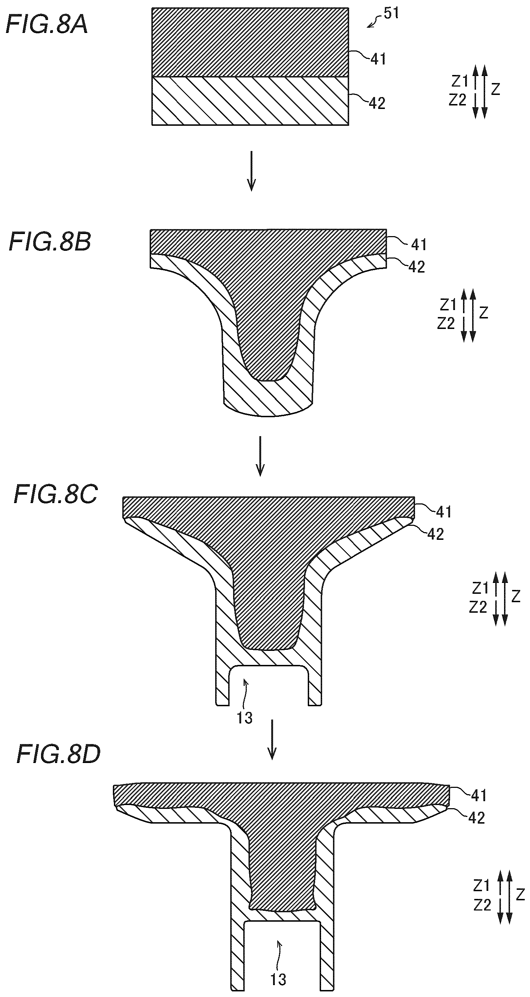

The negative electrode terminal 10 is formed by pressing into a rivet-like shape, with the Al layer 41 disposed on the Z1 side and the Cu layer 42 disposed on the Z2 side, as shown in FIGS. 3 and 5. As shown in FIG. 5, the negative electrode terminal 10 includes the cylindrical shaft 11 extending in the Z direction (stacking direction), and the annular flange 12 at and around an end of the shaft 11 on the Z1 side so as to extend radially in an X-Y plane direction from the shaft 11. The recess 13 is formed at the end of the shaft 11 of the negative electrode terminal 10 on the Z2 side. The outer surface of the recess 13 is composed of the Cu layer 42. The outer peripheral portion (a portion surrounding the recess 13) of the recess 13 is defined by a circular side wall 13a as viewed from the Z2 side. Although the Al layer 41 is depicted as a rectangle for simplification in FIG. 5, as a result of being elongated to the Z2 side during press working, the Al layer 41 has a T-like shape, as shown in FIG. 8(d).

As shown in FIG. 3, an insulating packing 7 is disposed between the flange 12 of the negative electrode terminal 10 and the lid member 2. The packing 7 includes an insertion hole 7a into which the shaft 11 of the negative electrode terminal 10 is inserted. The flange 12 of the negative electrode terminal 10 is disposed on the upper side (Z1 side) of the lid member 2, and is thus exposed to the outside of the lithium-ion battery 1. On the other hand, a portion of the shaft 11 of the negative electrode terminal 10 that protrudes downward (Z2 side) relative to the flange 12 is disposed in the insertion hole 7a and the insertion hole 2a, and inside the lithium-ion battery 1 (tank member 3). A distal end (recess 13) on the Z2 side of the shaft 11 of the negative electrode terminal 10 disposed inside the lithium-ion battery 1 (tank member 3) is disposed so as not to directly contact the electrolyte 30.

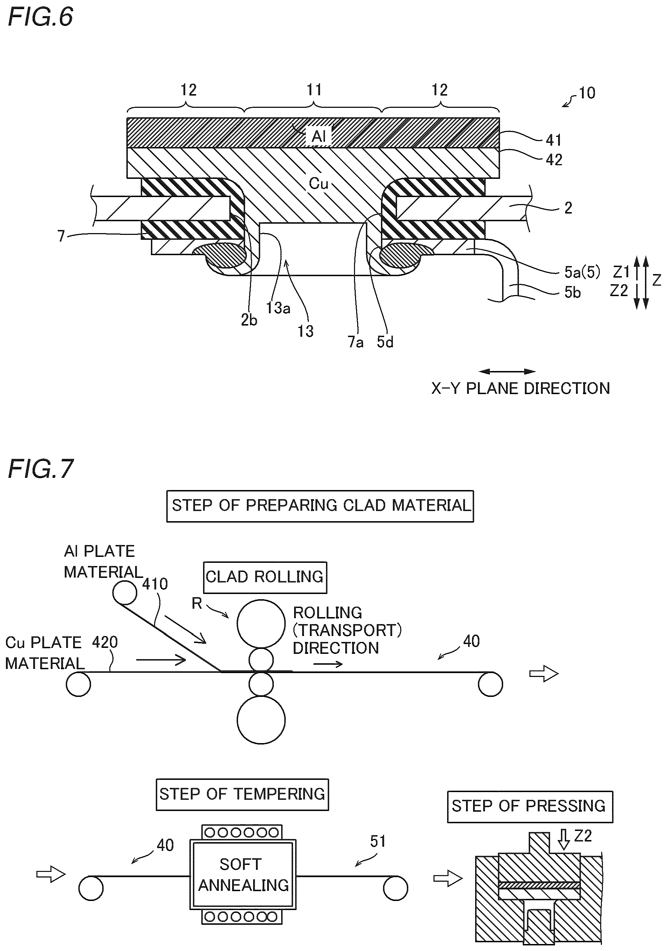

As shown in FIG. 6, the recess 13 on the Z2 side of the shaft 11 of the negative electrode terminal 10 is pushed and expanded in the X-Y plane direction when the negative electrode terminal 10 is swaged and fixed to the connector 5a (negative electrode component) of the negative electrode current collector 5. Although the Al layer 41 is depicted as a rectangle for simplification in FIG. 6, as a result of being elongated to the Z2 side during press working, the Al layer 41 has a T-like shape, as shown in FIG. 8(d).

As shown in FIG. 3, the positive electrode terminal 20 has the same external shape as the negative electrode terminal 10. That is, the positive electrode terminal 20 has a cylindrical shaft 21 extending in the Z direction, an annular flange 22 at and around an end of the shaft 21 on the Z1 side so as to extend radially in the X-Y plane direction from the shaft 21, and a recess 23 at an end of the shaft 21 on the Z2 side. The positive electrode terminal 20 is made of pure Al.

An insulating packing 8 is disposed between the flange 22 of the positive electrode terminal 20 and the lid member 2. The packing 8 includes an insertion hole 8a into which the shaft 21 of the positive electrode terminal 20 is inserted. The flange 22 of the positive electrode terminal 20 is disposed on the upper side (Z1 side) of the lid member 2, and is thus exposed to the outside of the lithium-ion battery 1. On the other hand, a portion of the shaft 21 of the positive electrode terminal 20 that protrudes downward (Z2 side) relative to the flange 22 is disposed in the insertion hole 8a and the insertion hole 2b and inside the lithium-ion battery 1 (tank member 3). A distal end (recess 23) on the Z2 side of the shaft 21 of the positive electrode terminal 20 disposed inside the lithium-ion battery 1 (tank member 3) is disposed so as not to directly contact the electrolyte 30.

### Method for Manufacturing Negative Electrode Terminal

A method for manufacturing the negative electrode terminal 10 includes steps of preparing the clad material 40 (see FIG. 4) in which the Al layer 41 and the Cu layer 42 are bonded to each other by rolling them in the stacked state, tempering the clad material 40 into a press blank 51, which is a material to be pressed, and pressing the press blank 51 to form the flange 12, the shaft 11, and the recess 13 at the end of the shaft 11 on the Z2 side, as shown in FIG. 7.

The step of preparing the clad material 40 is performed by stacking an Al plate material 410 made of an Al alloy containing the highest content of Al and the second highest content of Mn or Mg and having a conductivity of 30% IACS or more, and a Cu plate material 420 made of Cu and rolling (clad rolling) them with a roller R, and further performing diffusion annealing. By the clad rolling, the Al plate material 410 and the Cu plate material 420 are plastically deformed in the stacking direction and are bonded to each other. Furthermore, by the diffusion annealing, the Al plate material 410 (Al layer 41) and the Cu plate material 420 (Cu layer 42) are diffusion bonded to each other in the stacking direction. Thus, as shown in FIG. 4, the clad material 40 in which the Al layer 41 and the Cu layer 42 are diffusion bonded to each other in the stacking direction is formed. At this time, the Al plate material 410 and the Cu plate material 420 may be tempered in advance such that a difference between the Vickers hardness of the Al plate material 410 and the Vickers hardness of the Cu plate material 420 is reduced, and then the clad rolling may be performed. In addition, the clad rolling may be cold rolling performed at room temperature or warm rolling performed by heating. In addition, the furnace environment and holding conditions during the diffusion annealing may be selected in consideration of the material of the Al plate material 410 and the material of the Cu plate material 420.

The step of tempering the clad material 40 into the press blank 51 is performed by tempering the clad material 40 into the press blank 51 that is easy to press, in which the Al layer 41 having a Vickers hardness of 30 HV or more and the Cu layer 42 having a Vickers hardness of 50 HV or more and 80 HV or less are diffusion bonded to each other in the stacking direction (Z direction). At this time, the Al layer 41 of the press blank 51 is tempered to have a Vickers hardness of 30 HV or more, preferably 30 HV or more and 75 HV or less, and more preferably 30 HV or more and 50 HV or less. At the same time, the Cu layer 42 of the press blank 51 is tempered to have a Vickers hardness of 50 HV or more and 80 HV or less. For example, the Al layer 41 made of A1050 may be tempered to have about 25 HV, the Al layer 41 made of A3003 may be tempered to have about 40 HV, or the Al layer 41 made of A5052 may be tempered to have about 60 HV. For example, the Cu layer 42 made of C1020 may be tempered to have about 55 HV.

The step of tempering the clad material 40 into the press blank 51 is performed by soft annealing (continuous annealing) in which the clad material 40 is heated while being continuously transported into a furnace, for example. At this time, the soft annealing is performed in the furnace (continuous furnace) capable of maintaining heating for several minutes at a temperature of 500°C or more and 650°C or less. The soft annealing is not limited to being performed in a continuous furnace, but can also be performed by placing the clad material 40 in a batch-type furnace. The press blank 51 may have any shape that allows press working, and may be, for example, a long strip shape or a rectangular shape obtained by cutting the clad material 40 to a predetermined size.

The step of pressing the press blank 51 is performed by pressing the press blank 51 to form the flange 12, the shaft 11 extending from the flange 12 in the stacking direction (Z direction) of the Al layer 41 and the Cu layer 42, and the recess 13 located at the end of the shaft 11 on the Cu layer 42 side (Z2 side) and including the surface composed of the Cu layer 42.

In the step of pressing the press blank 51, as shown in FIG. 8, the shape of the press blank 51 is formed into the shape of the negative electrode terminal 10 by performing the press working a plurality of times. Specifically, the shape of the press blank 51 shown in FIG. 8(a) is formed into the shape of the negative electrode terminal 10 including the flange 12, the shaft 11 extending from the flange 12 to the Z2 side in the stacking direction of the Cu layer 42 and the Al layer 41, and the recess 13 by performing the press working a plurality of times as shown in FIG. 8(b) to FIG. 8(d). For example, first, the press blank 51 is placed in the cavity of a die of a press working machine. At this time, the Cu layer 42 of the press blank 51 is placed on the Z2 side in the cavity of the die such that the outer surfaces of the shaft 11 and the recess 13 of the negative electrode terminal 10 are composed of the Cu layer 42. The cavity of this die has a cavity shape for forming intermediate shapes leading to the final shapes of the shaft 11, the flange 12, and the recess 13 of the negative electrode terminal 10.

Next, the press blank 51 is pressed mainly from the Z1 side to the Z2 side. As a result of this first press working, the Cu layer 42 is elongated to the Z2 side in the stacking direction (Z direction), and the Al layer 41 is elongated to the Z2 side following the Cu layer 42 such that the original shape of the shaft 11 is formed, as shown in FIG. 8(b). The original shape of the flange 12 is formed by portions of the Al layer 41 and the Cu layer 42 that are not elongated to the Z2 side.

Next, the distal end of the shaft 11 in its original shape is pressed mainly toward the upper side (Z1 side) in the opposite direction to the direction in which the press working is performed when the shaft 11 is formed. As a result of this second press working, the original shape of the recess 13 including the surface composed of the Cu layer 42 is formed at the end of the shaft 11 on the Cu layer 42 side (Z2 side), as shown in FIG. 8(c).

Next, the recess 13 in its original shape is pressed mainly toward the Z1 side such that the depth of the recess 13 is increased. As a result of this third press working, the press blank 51 is formed into the shape of the negative electrode terminal 10, as shown in FIG. 8(d). That is, the press blank 51 is formed into the shape of the negative electrode terminal 10 including the flange 12, the shaft 11 extending from the flange 12 to the Z2 side in the stacking direction of the Cu layer 42 and the Al layer 41, and the recess 13 located at the distal end of the shaft 11 on the Z2 side and including the surface composed of the Cu layer 42. After this press working, the Al layer 41 has a Vickers hardness of preferably 55 HV or more, more preferably 66 HV or more, even more preferably 66 HV or more and 102 HV or less, and most preferably 66 HV or more and 73 HV or less.

### Method for Manufacturing Battery

The lithium-ion battery 1 is constructed by placing the power generation element 4 including the positive electrode 4a, the negative electrode 4b, and the separator 4c, the negative electrode current collector 5, and the positive electrode current collector 6 in the tank member 3 containing the electrolyte 30, and then attaching the lid member 2. At this time, the packing 7 and the negative electrode terminal 10 are inserted into the lid member 2, and the recess 13 of the negative electrode terminal 10 is swaged and fixed to the negative electrode current collector 5. Similarly, the packing 8 and the positive electrode terminal 20 are inserted into the lid member 2, and the recess 23 is swaged and fixed to the positive electrode current collector 6. Then, the assembled battery 100 is constructed by connecting a plurality of lithium-ion batteries 1 by the bus bars 101.

### Advantageous Effects of This Embodiment

According to this embodiment, the following advantageous effects are achieved.

In the battery terminal (negative electrode terminal 10) according to this embodiment, the Al layer 41 is made of an Al alloy containing Mn or Mg. Accordingly, the hardness of the Al layer 41 is larger than that of an Al layer made of pure Al, and thus a decrease in the hardness of the Al layer 41 when the Cu layer 42 made of Cu is softened by annealing can be reduced or prevented as compared with the Al layer made of pure Al. When the step of press working is performed after annealing, the hardness of the Al layer 41 after annealing is larger than that of the Al layer made of pure Al, and thus the possibility that the Al layer 41 is excessively elongated can be reduced or prevented. Therefore, the possibility that the Al layer 41 is elongated more than the Cu layer 42 such that the Al layer 41 breaks through the Cu layer 42 that the surface of the side wall 13a of the recess 13 is composed of and is exposed on the surface of the side wall 13a of the recess 13 can be reduced or prevented. Thus, exposure of the Al layer 41 on the surface of the recess 13 can be reduced or prevented, and thus formation of a gap in the recess 13 due to dissolution of the Al layer 41 caused by contact of the Al layer 41 with the electrolyte 30 at the recess 13 that is swaged to the negative electrode current collector 5 can be reduced or prevented. Consequently, a deterioration in the electrical characteristics of the lithium-ion battery 1 can be reduced or prevented. Furthermore, the conductivity is 30% IACS or more, and thus the conductivity required to function as the battery terminal (negative electrode terminal 10) can be ensured. In this respect, the electrical characteristics of the lithium-ion battery 1 can be maintained. Consequently, it is possible to provide the battery terminal (negative electrode terminal 10) in which exposure of the Al layer 41 to a portion (particularly the thinned side wall 13a of the recess 13), the surface of which needs to be composed of the Cu layer 42, is reduced or prevented while the electrical characteristics of the lithium-ion battery 1 are maintained.

In the battery terminal (negative electrode terminal 10) according to this embodiment, the Al alloy has a conductivity of 40% IACS or more. Accordingly, the conductivity required to function as the battery terminal (negative electrode terminal 10) can be sufficiently ensured.

In the battery terminal (negative electrode terminal 10) according to this embodiment, the Al alloy contains the highest content of Al and the second highest content of Mn. The Al layer 41 made of the Al alloy containing the highest content of Al and the second highest content of Mn has a lower hardness than an Al layer made of an Al alloy containing the highest content of Al and the second highest content of Mg. Therefore, a decrease in the hardness of the Al layer 41 made of the Al alloy containing the highest content of Al and the second highest content of Mn due to annealing can be reduced or prevented as compared with the Al layer made of pure Al, while a decrease in the hardness the Al layer 41 made of the Al alloy containing the highest content of Al and the second highest content of Mn due to annealing can be increased as compared with the Al layer made of the Al alloy containing the highest content of Al and the second highest content of Mg. Thus, the possibility that the Al layer 41 made of the Al alloy containing the highest content of Al and the second highest content of Mn is elongated more than the Cu layer 42 can be reduced or prevented as compared with the Al layer made of pure Al, and the press workability can be improved as compared with the Al layer made of the Al alloy containing the highest content of Al and the second highest content of Mg. In addition, the Al layer 41 made of the Al alloy containing the highest content of Al and the second highest content of Mn has a higher conductivity than the Al alloy containing the highest content of Al and the second highest content of Mg, and thus the conductivity required to function as the battery terminal (negative electrode terminal 10) can be sufficiently ensured. In this respect, the electrical characteristics of the lithium-ion battery 1 can be maintained. The inventors of the present application have learned the above points through examples (simulations) described below.

The method for manufacturing the battery terminal (negative electrode terminal 10) according to this embodiment includes the step of preparing the clad material 40 in which the Al layer 41 made of the Al alloy containing the highest content of Al and the second highest content of Mn or Mg and having a conductivity of 30% IACS or more, and the Cu layer 42 made of Cu are diffusion bonded to each other in the stacking direction. Accordingly, the Vickers hardness of the Al layer 41 is 30 HV or more, and thus the inventors of the present application have learned through the examples (simulations) described below that the possibility that the Al layer 41 breaks through the Cu layer 42 that the surface of the side wall 13a of the recess 13 is composed of and is exposed on the surface of the side wall 13a of the recess 13 can be reduced or prevented. Thus, exposure of the Al layer 41 on the surface of the side wall 13a of the recess 13 can be reduced or prevented, and thus formation of a gap in the Al layer 41 caused by contact of the electrolyte 30 with the exposed Al layer 41 can be reduced or prevented. Consequently, a deterioration in the electrical characteristics of the lithium-ion battery 1 can be reduced or prevented. In addition, the conductivity is 30% IACS or more, and thus the conductivity required to function as the battery terminal (negative electrode terminal 10) can be ensured. In this respect, the electrical characteristics of the lithium-ion battery 1 can be maintained. Consequently, it is possible to manufacture the battery terminal (negative electrode terminal 10) in which exposure of the Al layer 41 to the portion (particularly the thinned side wall 13a of the recess 13), the surface of which needs to be composed of the Cu layer 42, is reduced or prevented while the electrical characteristics of the lithium-ion battery 1 are maintained.

In the method for manufacturing the battery terminal (negative electrode terminal 10) according to this embodiment, the step of tempering the clad material 40 into the press blank 51 includes tempering the Al layer 41 to have a Vickers hardness of 30 HV or more and 75 HV or less, and tempering the Cu layer 42 to have a Vickers hardness of 50 HV or more and 80 HV or less. Accordingly, the inventors of the present application have learned through the examples (simulations) described below that the possibility that the Al layer 41 breaks through the Cu layer 42 that the surface of the side wall 13a of the recess 13 is composed of and is exposed on the surface of the side wall 13a of the recess 13 during press working can be reduced or prevented.

In the method for manufacturing the battery terminal (negative electrode terminal 10) according to this embodiment, the step of preparing the clad material 40 includes preparing the clad material by diffusion bonding the Al layer 41 made of the Al alloy having a conductivity of 40% IACS or more and the Cu layer 42 made of Cu to each other in the stacking direction. Accordingly, the Al layer 41 is made of the Al alloy having a conductivity of 40% IACS or more, and thus the electrical characteristics of the lithium-ion battery 1 can be improved as compared with a case of an Al layer made of an Al alloy having a conductivity of 30% IACS or more and less than 40% IACS.

The battery (lithium-ion battery 1) according to this embodiment includes the battery terminal (negative electrode terminal 10) including the flange 12 in which the Al layer 41 made of the Al alloy containing the highest content of Al and the second highest content of Mn or Mg and having a conductivity of 30% IACS or more, and the Cu layer 42 made of Cu are diffusion bonded to each other in the stacking direction, and the shaft 11 extending from the flange 12 to the Z2 side in the stacking direction (Z direction) of the Al layer 41 and the Cu layer 42, the electrolyte 30, the housing (the lid member 2 and the tank member 3) to store the electrolyte 30, the positive electrode component (the positive electrode 4a and the positive electrode current collector 6 including the connector 6a, the leg 6b, and the connection plate 6c) included in the positive electrode side of the lithium-ion battery 1, the negative electrode component (the negative electrode 4b and the negative electrode current collector 5 including the connector 5a, the leg 5b, and the connection plate 5c) included in the negative electrode side of the lithium-ion battery 1, and the separator 4c to separate the positive electrode 4a from the negative electrode 4b of the lithium-ion battery 1. The recess 13 of the battery terminal (negative electrode terminal 10) is swaged and fixed to the negative electrode component. As described above, in the battery terminal (negative electrode terminal 10), exposure of the Al layer 41 on the surface of the side wall 13a of the recess 13 is reduced or prevented while the electrical characteristics of the lithium-ion battery 1 are maintained, and thus dissolution of the Al layer 41 caused by contact of the Al layer 41 with the electrolyte 30 at the recess 13 of the battery terminal (negative electrode terminal 10) that is swaged to the negative electrode component of the lithium-ion battery 1 can be reduced or prevented. Consequently, a deterioration in the electrical characteristics of the lithium-ion battery 1 due to formation of a gap in the recess 13 of the battery terminal (negative electrode terminal 10) can be reduced or prevented. In addition, the conductivity is 30% IACS or more, and thus the conductivity required to function as the battery terminal (negative electrode terminal 10) can be ensured. In this respect, the electrical characteristics of the lithium-ion battery 1 can be maintained. By using the battery terminal (negative electrode terminal 10) in which exposure of the Al layer 41 to the portion (particularly the thinned side wall 13a of the recess 13), the surface of which needs to be made of the Cu layer 42, is reduced or prevented, it is possible to provide the battery (lithium-ion battery 1) in which a deterioration in the electrical characteristics caused by the battery terminal (negative electrode terminal 10) is reduced or prevented while the electrical characteristics of the lithium-ion battery 1 are maintained.

The method for manufacturing the battery (lithium-ion battery 1) according to this embodiment is a method for manufacturing the lithium-ion battery 1 including the battery terminal (negative electrode terminal 10) including the flange 12 in which the Al layer 41 made of the Al alloy containing the highest content of Al and the second highest content of Mn or Mg and having a conductivity of 30% IACS or more, and the Cu layer 42 made of Cu are diffusion bonded to each other in the stacking direction, the shaft 11 extending from the flange 12 to the Z2 side in the stacking direction (Z direction) of the Al layer 41 and the Cu layer 42, and the recess 13 located at the end of the shaft 11 on the Cu layer 42 side (Z2 side) and having the surface composed of the Cu layer 42, the electrolyte 30, the housing (the lid member 2 and the tank member 3) to store the electrolyte 30, the positive electrode component (the positive electrode 4a, the positive electrode current collector 6 including the connector 6a, the leg 6b, and the connection plate 6c, and the positive electrode terminal 20) included in the positive electrode side of the lithium-ion battery 1, the negative electrode component (the negative electrode 4b, the negative electrode current collector 5 including the connector 5a, the leg 5b, and the connection plate 5c, and the negative electrode terminal 5) included in the negative electrode side of the lithium-ion battery 1, and the separator 4c to separate the positive electrode from the negative electrode of the lithium-ion battery 1, and includes the step of swaging and fixing the recess 13 of the battery terminal (negative electrode terminal 10) to the negative electrode component. As described above, in the battery terminal (negative electrode terminal 10), exposure of the Al layer 41 on the surface of the side wall 13a of the recess 13 is reduced or prevented while the electrical characteristics of the lithium-ion battery 1 are maintained, and thus dissolution of the Al layer 41 caused by contact of the Al layer 41 with the electrolyte 30 at the recess 13 of the battery terminal (negative electrode terminal 10) that is swaged to the negative electrode component of the lithium-ion battery 1 can be reduced or prevented. Consequently, a deterioration in the electrical characteristics of the lithium-ion battery 1 due to formation of a gap in the recess 13 of the battery terminal (negative electrode terminal 10) can be reduced or prevented. In addition, the conductivity is 30% IACS or more, and thus the conductivity required to function as the battery terminal (negative electrode terminal 10) can be ensured. In this respect, the electrical characteristics of the lithium-ion battery 1 can be maintained. By using the battery terminal (negative electrode terminal 10) in which exposure of the Al layer 41 to the portion (particularly the thinned side wall 13a of the recess 13), the surface of which needs to be composed of the Cu layer 42, is reduced or prevented, it is possible to manufacture the lithium-ion battery 1 in which a deterioration in the electrical characteristics caused by the battery terminal (negative electrode terminal 10) is reduced or prevented while the electrical characteristics of the lithium-ion battery 1 are maintained.

### Examples

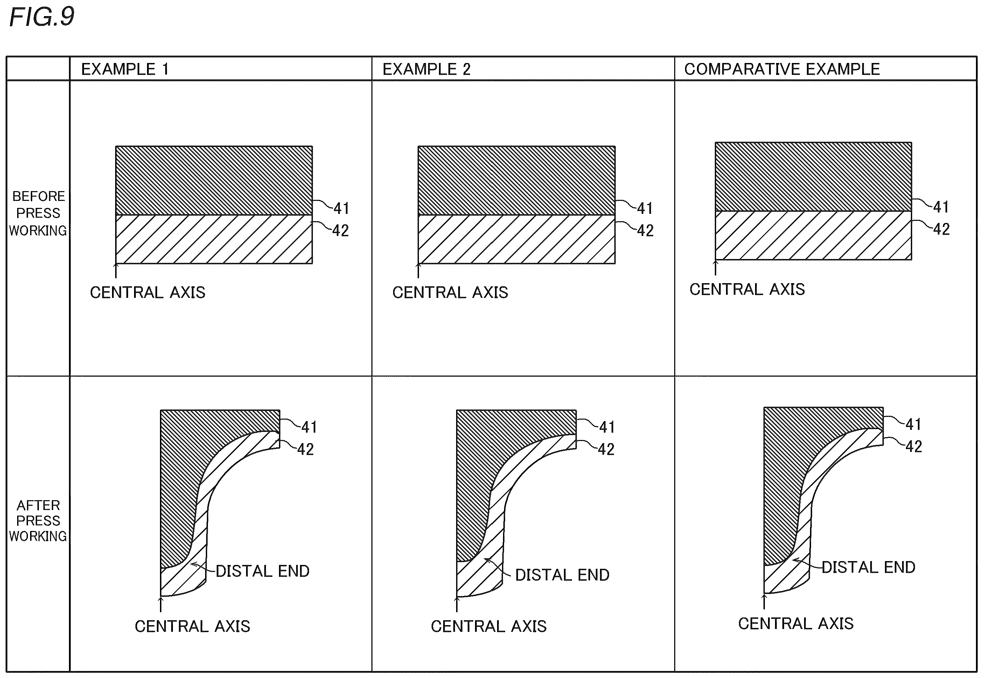

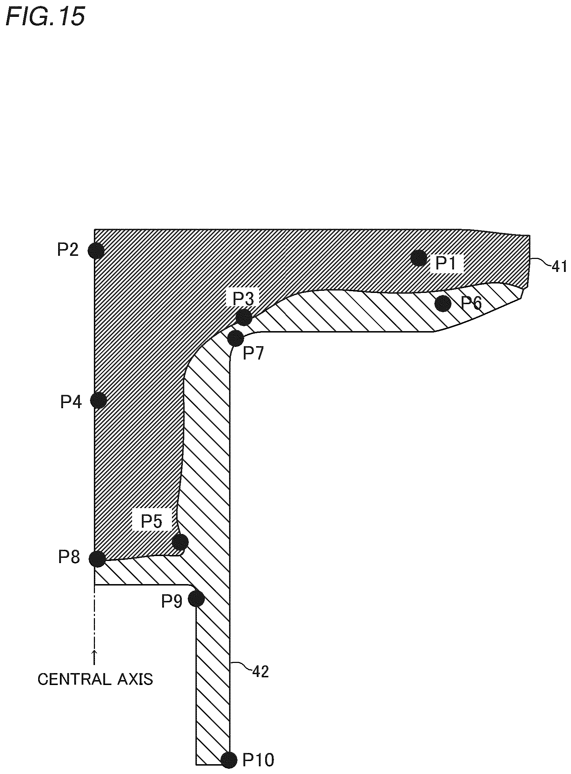

A CAE (Computer Aided Engineering) simulation and the results of the simulation for the battery terminal (negative electrode terminal 10) according to the aforementioned embodiment are described below with reference to FIGS. 9 to 16. FIGS. 9 to 16 show sectional views of the negative electrode terminal 10 cut in the Z direction along a central axis passing through the center of the cylindrical shaft 11 of the battery terminal (negative electrode terminal 10), based on the central axis.

In this CAE simulation, a clad material 40 was set as Example 1, which includes an Al layer 41 made of an Al alloy (hereinafter referred to as "A3003") corresponding to A3003, which is a well-known Al-Mn based Al alloy containing the highest content of Al and the second highest content of Mn, and a Cu layer 42 made of Cu (hereinafter referred to simply as "C1020") corresponding to C1020, which is well-known pure Cu. As Example 2, a clad material 40 was set, which includes an Al layer 41 made of an Al alloy (hereinafter referred to simply as "A5052") corresponding to A5052, which is a well-known Al-Mg based Al alloy containing the highest content of Al and the second highest content of Mg, and a Cu layer 42 made of Cu corresponding to C1020. As Comparative Example, a clad material 40 was set, which includes an Al layer 41 made of Al (hereinafter referred to simply as "A1050") corresponding to A1050, which is well-known pure Al, and a Cu layer 42 made of Cu corresponding to C1020.

In this CAE simulation, the plastic deformation progression of the Al layer 41 and Cu layer 42 included in the clad material 40 when the negative electrode terminal 10 is manufactured by press working (forging) using the clad materials 40 of Example 1, Example 2, and Comparative Example 1 was analyzed, and the Vickers hardness was obtained based on the analytical value obtained by the analysis. The press working (forging) was divided into first press molding, second press molding, and third press molding. The CAE simulation used DEFORM manufactured by SFTC (Scientific Forming Technologies Corporation) as software. As the simulation conditions, sparse (sparse method) was used as the solver, and the Newton-Raphson method was used as the iteration method. The units were SI units, the object temperature was 20°C, the environmental temperature was 20°C, there was no heat transfer, an interface between the Al layer 41 and the Cu layer 42 was fixed (no interface separation), and the tool operation speed (press working speed) was 10 mm/sec. The physical property values shown in TABLE 1 were given to the materials to be analyzed by CAE. The ratios of hardness to that of A1050 shown in TABLE 1 are not the physical property values given to the materials to be analyzed by CAE, but reference values. The ratios of the hardness of A3003 and A5052 to that of A1050 are calculated values obtained by dividing the hardness of A3003 by the hardness of A1050 and by dividing the hardness of A5052 by the hardness of A1050.

**TABLE 1**

| MATERIAL | HARDNESS HV | RATIO OF HARDNESS TO THAT OF A1050 | TENSILE STRENGTH MPa | ELONGATION % | CONDUCTIVITY % IACS |
|---|---|---|---|---|---|
| A3003 | 39 | +1.6 | 123 | 34 | 50 |
| A5052 | 59 | +2.4 | 209 | 16 | 35 |
| A1050 | 25 | - | 81 | 36 | 62 |
| C1020 | 54 | - | 233 | 45 | 101 |

As shown in TABLE 1, at the start of the first press molding, the Vickers hardness of the Al layer 41 is 39 HV in Example 1, 59 HV in Example 2, and 25 HV in Comparative Example. The Vickers hardness of the Cu layer 42 is 54 HV in all of Example 1, Example 2, and Comparative Example. The ratio of the hardness of A3003 to that of A1050 is +1.6, and the ratio of the hardness of A5052 to that of A1050 is +2.4. The Vickers hardness of each of the materials shown in TABLE 1 is an actual measured value.

At the start of the first press molding, the tensile strength of the Al layer 41 is 123 MPa in Example 1, 209 MPa in Example 2, and 81 MPa in Comparative Example. The tensile strength of the Cu layer 42 is 233 MPa in all of Example 1, Example 2, and Comparative Example. The tensile strength of each of the materials shown in TABLE 1 is an actual measured value.

At the start of the first press molding, the elongation of the Al layer 41 is 34% in Example 1, 16% in Example 2, and 36% in Comparative Example. The elongation of the Cu layer 42 is 45% in all of Example 1, Example 2, and Comparative Example. The elongation of each of the materials shown in TABLE 1 is an actual measured value.

At the start of the first press molding, the conductivity of the Al layer 41 is 50% IACS in Example 1, 35% IACS in Example 2, and 62% IACS in Comparative Example. The conductivity of the Cu layer 42 is 101% IACS in all of Example 1, Example 2, and Comparative Example. The conductivity of each of the materials shown in TABLE 1 is a general literature value.

The first press molding in the CAE simulation is a process of pressing a clad material (before press working) to form a first molded body (after press working) including a shaft 11 as shown in FIG. 8(b), as shown in FIG. **9****.** In the first press molding, distal ends of the Al layers 41, indicated by the arrows, which had been elongated toward the Cu layer 42 and deformed, reached substantially the same position in all of first molded bodies of Example 1, Example 2, and Comparative Example, and no clear difference was observed.

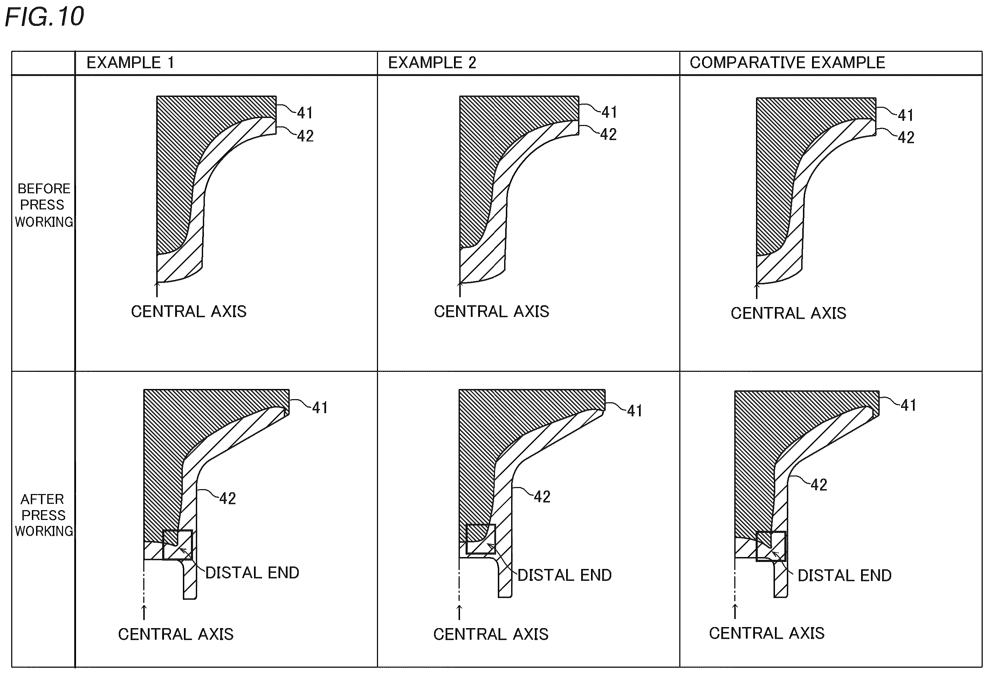

The second press molding in the CAE simulation was performed following the first press molding. The second press molding is a process of pressing the first molded body (before press working) formed by the first press molding to form a second molded body (after press working) including a recess 13 as shown in FIG. 8(c), as shown in FIG. 10. The depth of the recess 13 of the second molded body is shallower than the depth of the recess 13 of a third molded body formed by the next third press molding. By the second press molding following the first press molding, differences were observed in the shapes of the distal ends of the Al layers 41, indicated by the arrows, which had been further elongated toward the Cu layer 42 and deformed, between second molded bodies of Example 1, Example 2, and Comparative Example. Specifically, in the second molded bodies of Example 1 and Comparative Example, the distal ends of the Al layers 41, indicated by the arrows, which had been further elongated toward the Cu layer 42 and deformed, became substantially the same in shape, and were shaped to slightly protrude. On the other hand, in the second molded body of Example 2, the distal end of the Al layer 41, indicated the arrow, which had been further elongated toward the Cu layer 42 and deformed, was shaped not to protrude, and the shape was different from those of Example 1 and Comparative Example.

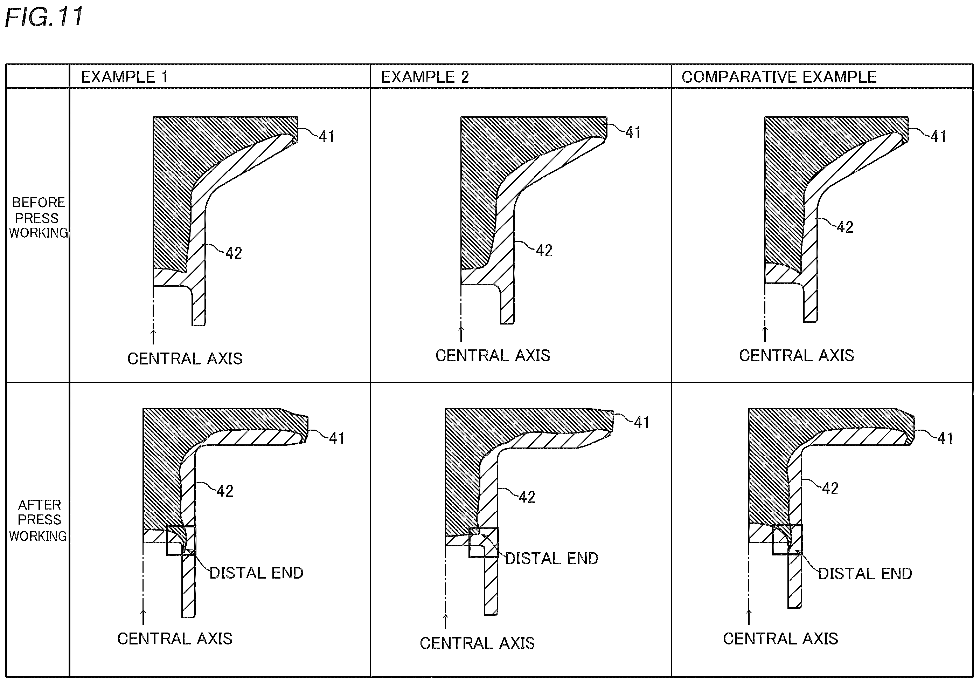

The third press molding in the CAE simulation was performed following the second press molding. The third press molding is a process of pressing the second molded body (before press working) formed by the second press molding to form a third molded body (after press working) including a recess 13 as shown in FIG. 8(d), as shown in FIG. 11. The depth of the recess 13 of the third molded body corresponds to the depth of the recess 13 of the battery terminal (negative electrode terminal 10). By the third press molding following the second press molding, differences were observed in the shapes of the distal ends of the Al layers 41, indicated by the arrows, which had been further elongated toward the Cu layer 42 and deformed, between third molded bodies of Example 1, Example 2, and Comparative Example. Specifically, in the third molded bodies of Example 1 and Comparative Example, the distal ends of the Al layers 41, indicated by the arrows, which had been further elongated toward the Cu layer 42 and deformed, were shaped to protrude sharply (see the boxed portions shown in FIG. 11). On the other hand, in the third molded body of Example 2, the distal end of the Al layer 41, indicated by the arrow, which had been further elongated toward the Cu layer 42 and deformed, was shaped to slightly protrude (see the boxed portion shown in FIG. 10), and the shape was different from those of Example 1 and Comparative Example.

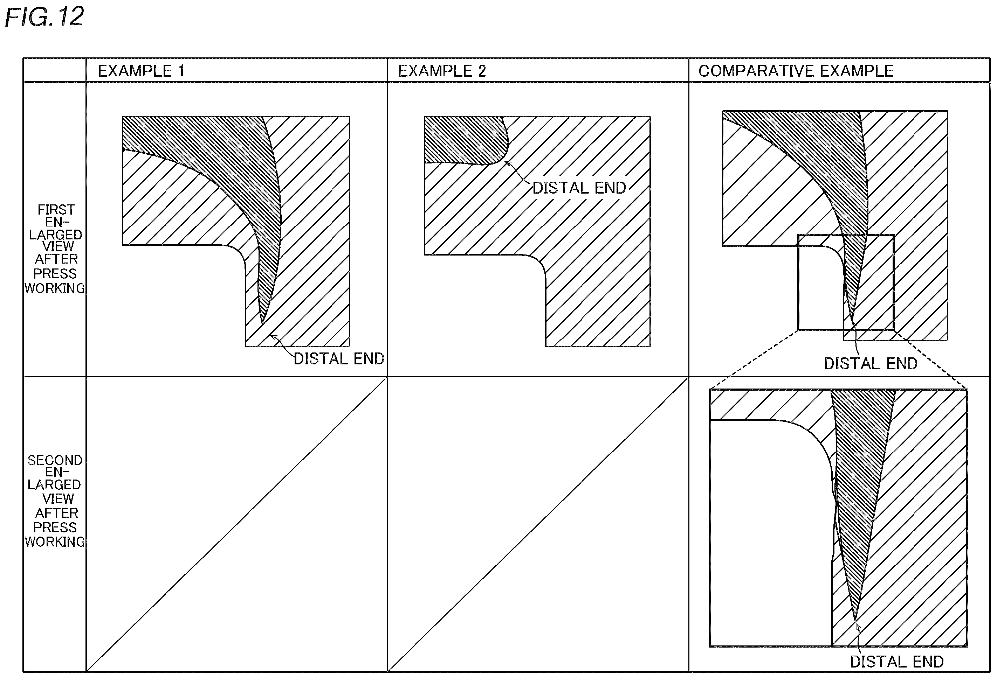

As shown in FIG. 12, when the distal ends of the Al layers 41, indicated by the arrows, which have been further elongated toward the Cu layer 42 and deformed, are enlarged, the distal end of the Al layer 41 of the third molded body of Example 2, which has been further elongated toward the Cu layer 42 and deformed, does not protrude sharply, as shown in a first enlarged view of FIG. 12. In contrast, the distal ends of the Al layers 41 of the third molded bodies of Example 1 and Comparative Example, which have been further elongated toward the Cu layer 42 and deformed, protrude sharply. However, when the positions of the distal ends of the Al layers 41, which have been further elongated toward the Cu layer 42 and deformed, are compared with each other, the distal end of the Al layer 41 of the third molded body of Example 1 does not reach the inner surface of the side wall 13a of the recess 13, whereas the distal end of the Al layer 41 of the third molded body of Comparative Example reaches the inner surface of the side wall 13a of the recess 13. Due to this difference in shape, as shown in a second enlarged view of FIG. 12, in the third molded body of Comparative Example, the Al layer 41 broke through the Cu layer 42 that the inner surface of the side wall 13a of the recess 13 is composed of, resulting in the Al layer 41 being exposed on the inner surface of the side wall 13a of the recess 13.

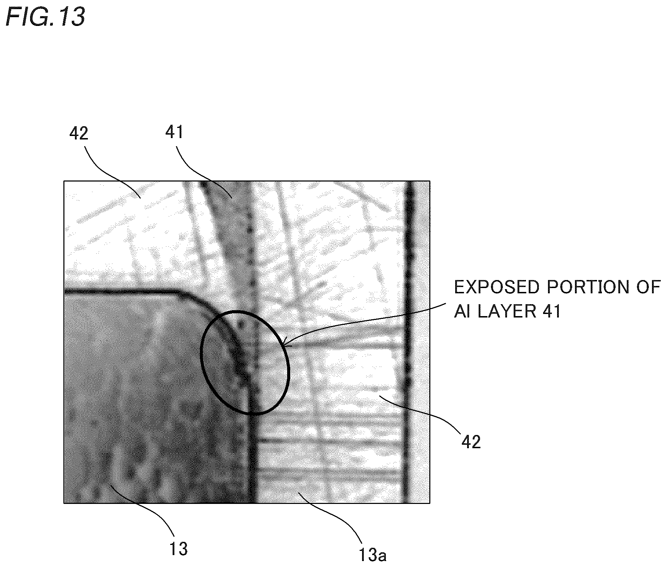

FIG. 13 shows a reference example. FIG. 13 is a cross-sectional photograph of an actual battery terminal formed by pressing an actual clad material and cut in the Z direction along the central axis. The actual clad material includes an Al layer 41 made of A1050 and a Cu layer 42 made of C1020, and corresponds to the clad material of Comparative Example in the CAE simulation. A cross-sectional portion of the actual battery terminal shown in FIG. 13 corresponds to a cross-sectional portion of the third molded body in the CAE simulation shown in the second enlarged view of FIG. 12. As shown in FIG. 13, when the clad material corresponding to Comparative Example is used, it can be confirmed that in the actual battery terminal, the Al layer 41 breaks through the Cu layer 42 that the inner surface of the side wall 13a of the recess 13 is composed of, and the Al layer 41 is exposed on the inner surface of the side wall 13a of the recess 13. It can also be confirmed that the shape of the sharply protruding distal end of the Al layer 41 that has been elongated and deformed as shown in FIG. 13 is substantially similar to the shape of the sharply protruding distal end of the Al layer 41 that has been elongated and deformed as shown in the second enlarged view of FIG. 12. Thus, the cross-sectional shape of the third molded body in the CAE simulation is substantially similar to the cross-sectional shape of the actual battery terminal (negative electrode terminal 10) actually formed by pressing, and thus it has been found that the reliability of the results of the CAE simulation is high.

From the CAE simulation described above, it has been found that the clad material 40 (Example 1) including the Al layer 41 made of A3003 and the Cu layer 42 made of C1020 is highly likely to have the Al layer 41 not exposed on the surface of the side wall 13a of the recess 13. It has also been found that the clad material 40 (Example 2) including the Al layer 41 made of A5052 and the Cu layer 42 made of C1020 is more likely to have the Al layer 41 not exposed on the surface of the side wall 13a of the recess 13 than Example 1. It has also been found that the clad material 40 (Comparative Example) including the Al layer 41 made of A1050 and the Cu layer 42 made of C1020 may have the Al layer 41 exposed on the surface of the side wall 13a of the recess 13. Therefore, it has been found that in Example 1 and Example 2 using Al alloys (A3003, A5052), exposure of the Al layers 41 on the surface of the side wall 13a of the recess 13 can be reduced or prevented, unlike Comparative Example using pure Al (A1050).

It has also been found that in Example 2 using A5052, the amount of deformation (flow) due to the elongation of the Al layer 41 caused by press working can be reduced as compared with Example 1 using A3003. Therefore, from the viewpoint of further reducing or preventing the elongation of the Al layer 41 during press working, it has been found that it is preferable to form the Al layer 41 using A5052 (No. A5000s), which is harder than A3003 (No. A3000s).

When the Al layer 41 using A5052 (Example 1) and the Al layer 41 using A3003 (Example 2), both of which are highly likely not to be exposed on the inner surface of the side wall 13a of the recess 13 during press working, are compared with each other, it is preferable to increase the conductivity of the Al layer 41 in order to improve the electrical characteristics of the battery terminal (negative electrode terminal 10), and thus from the viewpoint of improving electrical characteristics, it has been found that it is preferable to form the Al layer 41 using A3003 (No. A3000s) that has a higher conductivity than A5052 (No. A5000s).

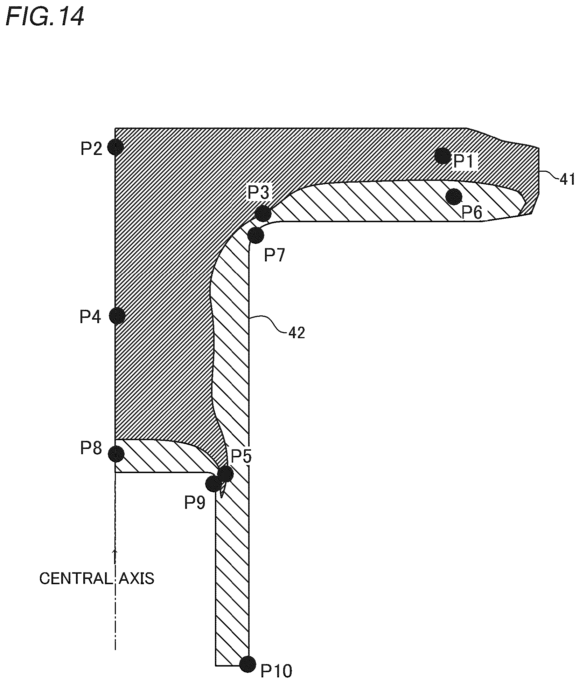

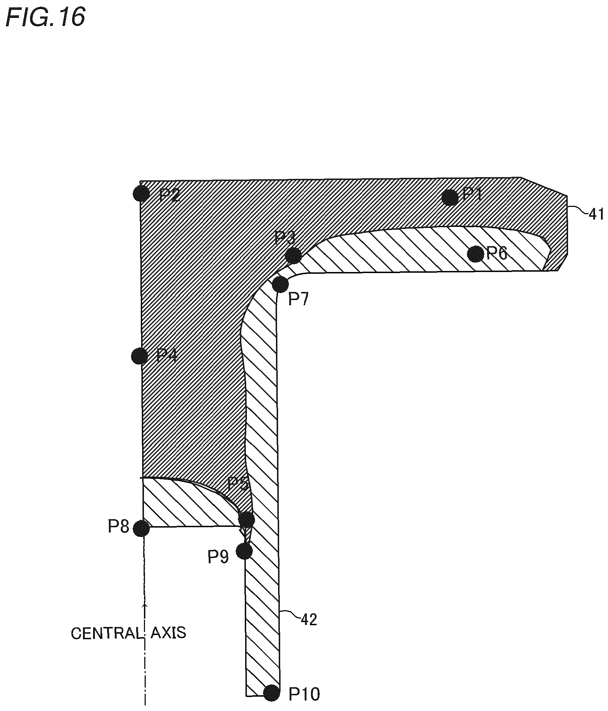

FIGS. 14 to 16 show the positions (ten positions P1 to P10) of the third molded bodies of Example 1, Example 2, and Comparative Example, in which the Vickers hardness was obtained by the CAE simulation. The third molded bodies in the CAE simulation correspond to battery terminals (negative electrode terminals). The Vickers hardness of the actual battery terminal (reference example) shown in FIG. 13 was also actually measured at substantially the same positions (ten positions P1 to P10) as in Comparative Example shown in FIG. 16.

TABLE 2 shows the Vickers hardness of the third molded bodies at the positions P1 to P10 shown in FIGS. 14 to 16, obtained by the CAE simulation, as well as the average Vickers hardness of the actual battery terminal (reference example) and values (differences from CAE) obtained by subtracting the Vickers hardness of Comparative Example from the Vickers hardness of the reference example.

**TABLE 2**

| POSITION | | VICKERS HARDNESS (HV) | | | | |
|---|---|---|---|---|---|---|
| | | THIRD MOLDED BODY (CAE) | | | ACTUAL BATTERY TERMINAL | |
| | | EXAMPLE 1 | EXAMPLE 2 | COMPARATIVE EXAMPLE | REFERENCE EXAMPLE | DIFFERENCE FROM CAE |
| Al LAYER | P1 | 66 | 97 | 49 | 46 | -3 |
| | P2 | 72 | 102 | 53 | 47 | -6 |
| | P3 | 73 | 102 | 53 | 52 | -1 |
| | P4 | 69 | 101 | 50 | 46 | -4 |
| | P5 | 73 | 101 | 54 | 53 | -1 |
| Cu LAYER | P6 | 126 | 128 | 126 | 125 | -1 |
| | P7 | 133 | 133 | 133 | 134 | +1 |
| | P8 | 128 | 132 | 123 | 110 | -13 |
| | P9 | 133 | 133 | 133 | 127 | -6 |
| | P10 | 122 | 120 | 128 | 114 | -14 |

TABLE 3 shows the ratio of Vickers hardness between Example 1 and Comparative Example (Example 1/Comparative Example) and the ratio of Vickers hardness between Example 2 and Comparative Example (Example 2/Comparative Example) based on the Vickers hardness of the third molded bodies of Example 1, Example 2, and Comparative Example shown in TABLE 2.

**TABLE 3**

| POSITION | | RATIO OF VICKERS HARDNESS (HV) OF THIRD MOLDED BODY (CAE) | |
|---|---|---|---|
| | | EXAMPLE 1/COMPARATIVE EXAMPLE | EXAMPLE 2/COMPARATIVE EXAMPLE |
| Al LAYER | P1 | +1.3 | +2.0 |
| | P2 | +1.4 | +1.9 |
| | P3 | +1.4 | +1.9 |
| | P4 | +1.4 | +2.0 |
| | P5 | +1.4 | +1.9 |
| Cu LAYER | P6 | +1.0 | +1.0 |
| | P7 | +1.0 | +1.0 |
| | P8 | +1.0 | +1.1 |
| | P9 | +1.0 | +1.0 |
| | P10 | +1.0 | +0.9 |

### Vickers Hardness at P1

As shown in FIGS. 14 to 16, in the third molded body, P1 is located in the Al layer 41 on the distal end side of the flange 12. The Vickers hardness at P1 was 49 HV in Comparative Example, whereas in Example 1, it was 66 HV, which is about 1.3 times that of Comparative Example (Example 1/Comparative Example), and in Example 2, it was 97 HV, which is about 2.0 times that of Comparative Example (Example 2/Comparative Example). A difference between the reference example (actual battery terminal), which was 46 HV, and Comparative Example (CAE) was about - 3 HV. In addition, in the clad material 40 before press working, the Vickers hardness of the Al layer 41 was 25 HV in A1050 (Comparative Example), whereas in Example 1, it was 39 HV, which is about 1.6 times that of A1050 (see TABLE 1), and in Example 2, it was 59 HV, which is about 2.4 times that of A1050 (see TABLE 1). Consequently, at the position P1, the trend of differences in Vickers hardness after press working (third molded bodies) (Example 2 > Example 1 > Comparative Example) was the same as the trend of differences in Vickers hardness before press working (clad materials 40) (Example 2 > Example 1 > Comparative Example). As shown in TABLE 2, a difference in Vickers hardness between Comparative Example and the reference example (difference from CAE) was -3 HV, which was slight. From this, it is conceivable that the Vickers hardness at the position P1 shows the same tendency in actual press working.

### Vickers Hardness at P2

As shown in FIGS. 14 to 16, in the third molded body, P2 is located in the vicinity of the central axis of the flange 12 and in the Al layer 41 on the Z1 side in the vicinity of the central axis of the shaft 11. The Vickers hardness at P2 was 53 HV in Comparative Example, whereas in Example 1, it was 72 HV, which is about 1.4 times that of Comparative Example (Example 1/Comparative Example), and in Example 2, it was 102 HV, which is about 1.9 times that of Comparative Example (Example 2/Comparative Example). A difference between the reference example (actual battery terminal), which was 47 HV, and Comparative Example (CAE) was about -6 HV. Consequently, at the position P2, similarly to the position P1, the trend of differences in Vickers hardness after pressing working (third molded bodies) (Example 2 > Example 1 > Comparative Example) was the same as the trend of differences in Vickers hardness before press working (clad materials 40) (Example 2 > Example 1 > Comparative Example). As shown in TABLE 2, a difference in Vickers hardness between Comparative Example and the reference example was -6 HV, which was slight. From this, it is conceivable that the Vickers hardness at the position P2 shows the same tendency in actual press working, similarly to the position P1.

### Vickers Hardness at P3

As shown in FIGS. 14 to 16, in the third molded body, P3 is located in the Al layer 41 at the boundary between the flange 12 and the shaft 11 and in the vicinity of the boundary with the Cu layer 42. The Vickers hardness at P3 was 53 HV in Comparative Example, whereas in Example 1, it was 73 HV, which is about 1.4 times that of Comparative Example (Example 1/Comparative Example), and in Example 2, it was 102 HV, which is about 1.9 times that of Comparative Example (Example 2/Comparative Example). A difference between the reference example (actual battery terminal), which was 52 HV, and Comparative Example (CAE) was about -1 HV. Consequently, at the position P3, similarly to the positions P1 and P2, the trend of differences in Vickers hardness after pressing working (third molded bodies) (Example 2 > Example 1 > Comparative Example) was the same as the trend of differences in Vickers hardness before press working (clad materials 40) (Example 2 > Example 1 > Comparative Example). As shown in TABLE 2, a difference in Vickers hardness between Comparative Example and the reference example was -1 HV, which was slight. From this, it is conceivable that the Vickers hardness at the position P3 shows the same tendency in actual press working, similarly to the positions P1 and P2.

### Vickers Hardness at P4

As shown in FIGS. 14 to 16, in the third molded body, P4 is located in the Al layer 41 in the vicinity of the central axis of the shaft 11 on the Z2 side relative to P2 and in the vicinity of the center of the shaft 11 excluding the recess 13 in the Z direction. The Vickers hardness at P4 was 50 HV in Comparative Example, whereas in Example 1, it was 69 HV, which is about 1.4 times that of Comparative Example (Example 1/Comparative Example), and in Example 2, it was 101 HV, which is about 2.0 times that of Comparative Example (Example 2/Comparative Example). A difference between the reference example (actual battery terminal), which was 46 HV, and Comparative Example (CAE) was about -4 HV. Consequently, at the position P4, similarly to the positions P1 to P3, the trend of differences in Vickers hardness after press working (third molded bodies) (Example 2 > Example 1 > Comparative Example) was the same as the trend of differences in Vickers hardness before press working (clad materials 40) (Example 2 > Example 1 > Comparative Example). As shown in TABLE 2, a difference in Vickers hardness between Comparative Example and the reference example was -4 HV, which was slight. From this, it is conceivable that the Vickers hardness at the position P4 shows the same tendency in actual press working, similarly to the positions P1 to P3.

### Vickers Hardness at P5

As shown in FIGS. 14 to 16, in the third molded body, P5 is located on the Z2 side of the shaft 11 excluding the recess 13 and in the Al layer 41 in the vicinity of the side wall 13a of the recess 13. The Vickers hardness at P5 was 54 HV in Comparative Example, whereas in Example 1, it was 73 HV, which is about 1.4 times that of Comparative Example (Example 1/Comparative Example), and in Example 2, it was 101 HV, which is about 1.9 times that of Comparative Example (Example 2/Comparative Example). A difference between the reference example (actual battery terminal), which was 53 HV, and Comparative Example (CAE) was about -1 HV. Consequently, at the position P5, similarly to the positions P1 to P4, the trend of differences in Vickers hardness after press working (third molded bodies) (Example 2 > Example 1 > Comparative Example) was the same as the trend of differences in Vickers hardness before press working (clad materials 40) (Example 2 > Example 1 > Comparative Example). As shown in TABLE 2, a difference in Vickers hardness between Comparative Example and the reference example was -1 HV, which was slight. From this, it is conceivable that the Vickers hardness at the position P5 shows the same tendency in actual press working, similarly to the positions P1 to P4.

### Vickers Hardness at P6

As shown in FIGS. 14 to 16, in the third molded body, P6 is located on the Z2 side relative to P1 and in the Cu layer 42 on the distal end side of the flange 12. The Vickers hardness at P6 was 126 HV in Comparative Example, whereas in Example 1, it was 126 HV, which is about 1.0 times that of Comparative Example (Example 1/Comparative Example), and in Example 2, it was 128 HV, which is about 1.0 times that of Comparative Example (Example 2/Comparative Example). The Vickers hardness of Comparative Example, 126 HV, is about 2.3 times (126 HV/54 HV) that of the clad material 40 before press working. A difference between the reference example (actual battery terminal), which was 125 HV, and Comparative Example (CAE) was about -1 HV. Consequently, at the position P6, the ratio of the Vickers hardness after press working (third molded bodies) to the Vickers hardness (54 HV) before press working (clad materials 40) was substantially the same (about 2.3 times), and after the press working (third molded bodies), the Vickers hardness of Example 1, Example 2, and Comparative Example became substantially the same. As shown in TABLE 2, a difference in Vickers hardness between Comparative Example and the reference example was -1 HV, which was slight. From this, it is conceivable that the Vickers hardness at the position P6 shows the same tendency in actual press working.

### Vickers Hardness at P7

As shown in FIGS. 14 to 16, in the third molded body, P7 is located on the Z2 side relative to P3 and in the Cu layer 42 at the boundary between the flange 12 and the shaft 11. The Vickers hardness at P7 was 133 HV in Comparative Example, whereas in Example 1, it was 133 HV, which is about 1.0 times that of Comparative Example (Example 1/Comparative Example), and in Example 2, it was 133 HV, which is about 1.0 times that of Comparative Example (Example 2/Comparative Example). The Vickers hardness of Comparative Example, 133 HV, is about 2.5 times (133 HV/54 HV) that of the clad material 40 before press working. A difference between the reference example (actual battery terminal), which was 134 HV, and Comparative Example (CAE) was about +1 HV. Consequently, at the position P7, the ratio of the Vickers hardness after press working (third molded bodies) to the Vickers hardness (54 HV) before press working (clad materials 40) was substantially the same (about 2.5 times), and after the press working (third molded bodies), the Vickers hardness of Example 1, Example 2, and Comparative Example became substantially the same. As shown in TABLE 2, a difference in Vickers hardness between Comparative Example and the reference example was +1 HV, which was slight. From this, it is conceivable that the Vickers hardness at the position P7 shows the same tendency in actual press working, similarly to the position P6.

### Vickers Hardness at P8

As shown in FIGS. 14 to 16, in the third molded body, P8 is located in the Cu layer 42 in the vicinity of the central axis of the shaft 11 on the Z2 side relative to P4 and in the vicinity of the center of a bottom portion (Z1 side) of the recess 13 of the shaft 11. The Vickers hardness at P8 was 123 HV in Comparative Example, whereas in Example 1, it was 128 HV, which is about 1.0 times that of Comparative Example (Example 1/Comparative Example), and in Example 2, it was 132 HV, which is about 1.1 times that of Comparative Example (Example 2/Comparative Example). The Vickers hardness of Comparative Example, 123 HV, is about 2.3 times (123 HV/54 HV) that of the clad material 40 before press working. A difference between the reference example (actual battery terminal), which was 110 HV, and Comparative Example (CAE) was about -13 HV. Consequently, at the position P8, the ratio of the Vickers hardness after press working (third molded bodies) to the Vickers hardness (54 HV) before press working (clad materials 40) was substantially the same (about 2.3 times), and after the press working (third molded bodies), the Vickers hardness of Example 1, Example 2, and Comparative Example became substantially the same. As shown in TABLE 2, a difference in Vickers hardness between Comparative Example and the reference example was -13 HV, which was slightly large, but considering that the position P8 is located at an end of the Cu layer 42 spaced apart from the boundary with the Al layer 41, this is thought to pose no problem. From this, it is conceivable that the Vickers hardness at the position P8 shows the same tendency in actual press working, similarly to the positions P6 and P7.

### Vickers Hardness at P9

As shown in FIGS. 14 to 16, in the third molded body, P9 is located at the boundary between the shaft 11 and the side wall 13a defining the recess 13 and in the Cu layer 42 in the vicinity of the inside of the side wall 13a. The Vickers hardness at P9 was 133 HV in Comparative Example, whereas in Example 1, it was 133 HV, which is about 1.0 times that of Comparative Example (Example 1/Comparative Example), and in Example 2, it was 133 HV, which is about 1.0 times that of Comparative Example (Example 2/Comparative Example). The Vickers hardness of Comparative Example, 133 HV, is about 2.5 times (133 HV/54 HV) that of the clad material 40 before press working. A difference between the reference example (actual battery terminal), which was 127 HV, and Comparative Example (CAE) was about -6 HV. Consequently, at the position P9, the ratio of the Vickers hardness after press working (third molded bodies) to the Vickers hardness (54 HV) before press working (clad materials 40) was substantially the same (about 2.5 times), and after the press working (third molded bodies), the Vickers hardness of Example 1, Example 2, and Comparative Example became substantially the same. As shown in TABLE 2, a difference in Vickers hardness between Comparative Example and the reference example was -6 HV, which was slight. From this, it is conceivable that the Vickers hardness at the position P9 shows the same tendency in actual press working, similarly to the positions P6 to P8.

### Vickers Hardness at P10

As shown in FIGS. 14 to 16, in the third molded body, P10 is located in the Cu layer 42 at an end on the Z2 side of the side wall 13a defining the recess 13. The Vickers hardness at P10 was 128 HV in Comparative Example, whereas in Example 1, it was 122 HV, which is about 1.0 times that of Comparative Example (Example 1/Comparative Example), and in Example 2, it was 120 HV, which is about 0.9 times that of Comparative Example (Example 2/Comparative Example). The Vickers hardness of Comparative Example, 128 HV, is about 2.5 times (128 HV/54 HV) that of the clad material 40 before press working. A difference between the reference example (actual battery terminal), which was 114 HV, and Comparative Example (CAE) was about -14 HV. Consequently, at the position P10, the ratio of the Vickers hardness after press working (third molded bodies) to the Vickers hardness (54 HV) before press working (clad materials 40) was substantially the same (about 2.5 times), and after the press working (third molded bodies), the Vickers hardness of Example 1, Example 2, and Comparative Example became substantially the same. As shown in TABLE 2, a difference in Vickers hardness between Comparative Example and the reference example was -14 HV, which was slightly large, but considering that the position P10 is located at an end of the Cu layer 42 spaced apart from the boundary with the Al layer 41, this is thought to pose no problem. From this, it is conceivable that the Vickers hardness at the position P10 shows the same tendency in actual press working, similarly to the positions P6 to P9.

As seen from the above, through the CAE simulation, the result is obtained that the trend of differences in Vickers hardness after press working (third molded bodies) (Example 2 > Example 1 > Comparative Example) was the same as the trend of differences in Vickers hardness before press working (clad materials 40) (Example 2 > Example 1 > Comparative Example), and thus it is conceivable that the Vickers hardness shows the same tendency in actual press working. Thus, it is conceivable that by appropriately setting the Vickers hardness of the Al layer 41 of the clad material 40 before press working, it is possible to control the flow (plastic deformation) of the Al layer 41 caused by the Vickers hardness of the Al layer 41 of the battery terminal (negative electrode terminal 10) after press working.

In addition, through the CAE simulation, the result is obtained that the Vickers hardness of the Al layer 41 (A1050) of Comparative Example after press working (third molded body) was less than 60 HV (49 HV to 54 HV), whereas the Vickers hardness of the Al layer 41 (A3003) in Example 1 after press working (third molded body) was 60 HV or more (66 HV to 73 HV). Similarly, the result is obtained that the Vickers hardness of the Al layer 41 (A5052) in Example 2 after press working (third molded body) was 60 HV or more (97 HV to 102 HV). Therefore, it is conceivable that the Al layer 41 of Comparative Example before press working (clad material 40) was softer than those of Example 1 and Example 2 before press working (clad materials 40), and was excessively elongated during press working. It is conceivable that the Al layer 41 was excessively elongated, and thus the Al layer 41, which was elongated more than the Cu layer 42, broke through the Cu layer 42 that the surface was supposed to be composed of, especially at the side wall 13a of the recess that became thin, and was exposed on the surface.

Furthermore, through the CAE simulation, the result is obtained that in Example 1 (A3003) and Example 2 (A5052) in which the Vickers hardness of the Al layers 41 before press working (clad materials 40) was larger than that of Comparative Example (A1050), the Al layers 41 did not break through the Cu layers 42 and were not exposed on the surface. From this, it has been found that it is possible to provide the battery terminal in which exposure of the Al layer 41 to the portion (particularly the thinned side wall 13a of the recess 13), the surface of which needs to be composed of the Cu layer 42, can be reduced or prevented by making the Al layer 41 of an Al alloy in No. A3000s or No. A5000s, containing the highest content of Al and the second highest content of Mn or Mg. In addition, as shown in the figures after press working in FIG. 11, the result is obtained that in Example 1 (A3003) in which the Vickers hardness of the Al layer 41 before press working (clad material 40) was larger than that of Comparative Example (A1050) and smaller than that of Example 2 (A5052), the distal end of the Al layer 41 did not break through the Cu layer 42 and was not exposed on the surface, and the distal end of the Al layer 41 was further elongated toward the Z2 side than in Example 2 (A5052). From this, it has been found that because the Al layer 41 preferably has a smaller Vickers hardness from the viewpoint of press workability, it is preferable to make the Al layer 41 of an Al alloy in No. A3000s, which has a Vickers hardness larger than that of Comparative Example (A1050) and smaller than that of Example 2 (A5052) before press working (clad material 40).

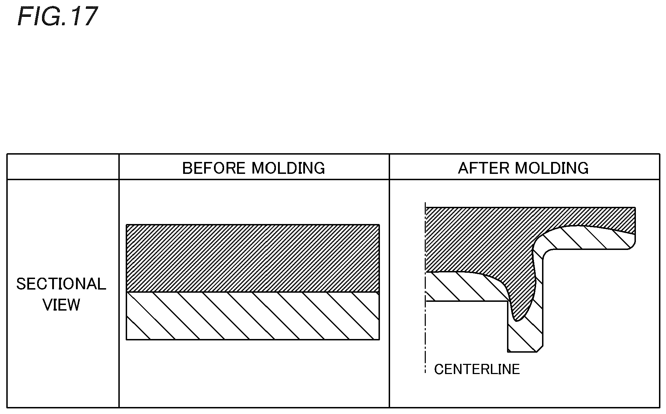

An additional CAE simulation and the results of the simulation for the battery terminal (negative electrode terminal 10) according to the aforementioned embodiment are described with reference to FIGS. 17 to 19. As shown in FIG. 17, the CAE simulation was performed assuming that the clad material 40 before molding was subjected to the first press molding, the second press molding, and the third press molding such that the molded battery terminal in which the shaft 11 and the recess 13 were formed was produced.

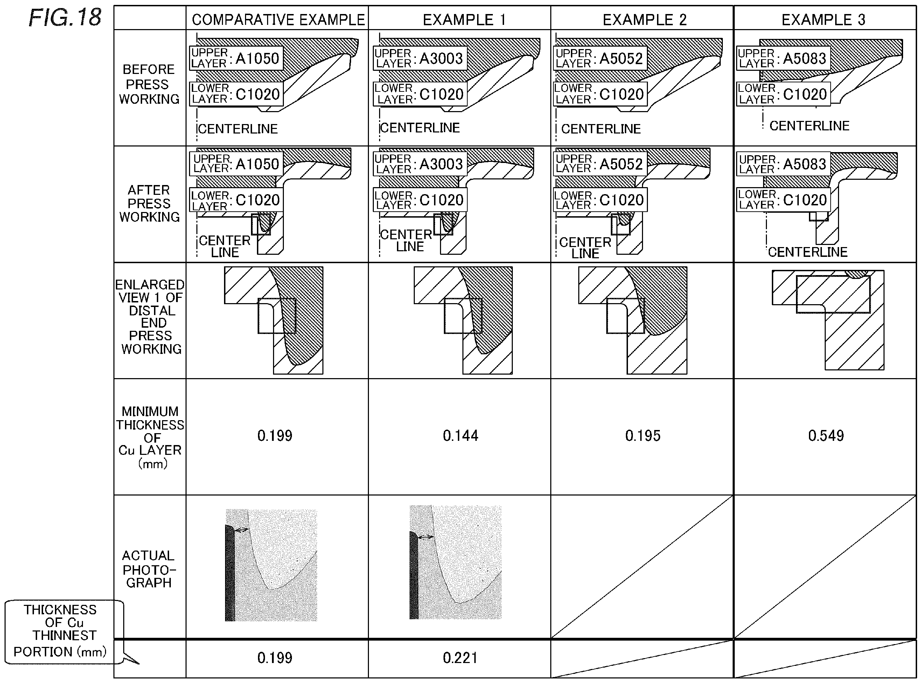

As shown in FIG. 18, in the additional CAE simulation, in addition to the aforementioned Example 1, Example 2, and Comparative Example, a clad material 40 including an Al layer 41 made of an Al alloy (hereinafter referred to as "A5083") corresponding to A5083, which is a well-known Al-Mn based Al alloy containing the highest content of Al and the second highest content of Mn, and a Cu layer 42 made of C1020 was set as Example 3.

The CAE simulation used DEFORM manufactured by SFTC as software. As the simulation conditions, sparse (sparse method) was used as the solver, and the Newton-Raphson method was used as the iteration method. The units were SI units, the object temperature was 20°C, the environmental temperature was 20°C, there was no heat transfer, an interface between the Al layer 41 and the Cu layer 42 was fixed (no interface separation), and the tool operation speed (press working speed) was 10 mm/sec.

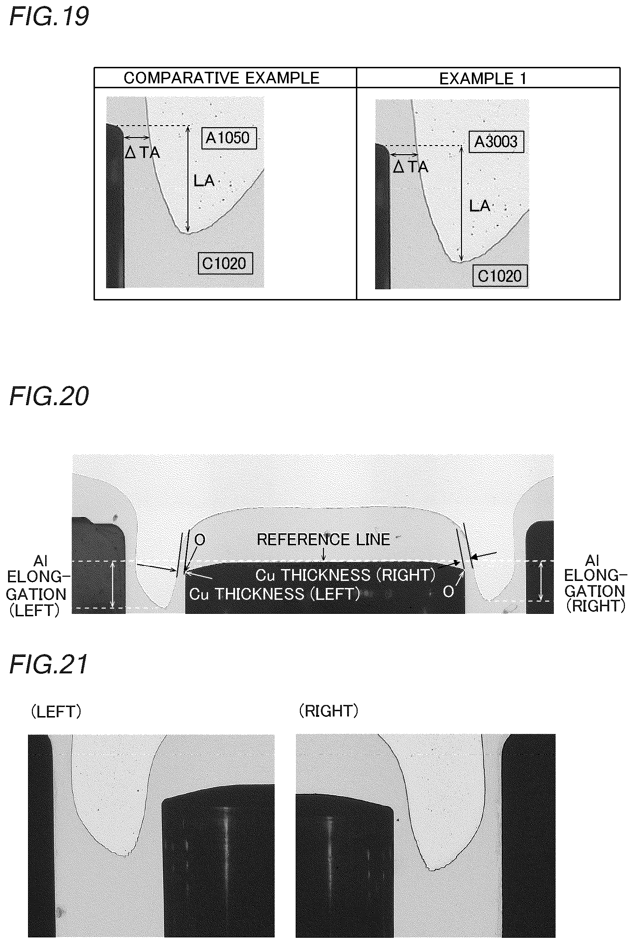

As shown in FIG. 19, the degree of elongation LA of Al, which is a length from the bottom surface of the recess 13 to a distal end of the Al layer 41, and the minimum thickness ΔTA of the Cu layer 42 located between the recess 13 and the Al layer 41 were measured.

FIG. 18 shows the state before the third press as the state before press working, and the state after the third press as the state after press working. The CAD this time is performed assuming a case in which a battery terminal with a short shaft 11 as shown in FIG. 8 is formed, unlike FIG. 11. Therefore, the pressing conditions are different from those in FIG. 11. The enlarged view of the distal end after press working refers to the enlarged view of the distal end of the Al layer 41 after press working. The minimum thickness of the Cu layer 42 of a portion surrounded by a square in the enlarged view of the distal end after press working is measured and is described as the predicted value of the minimum thickness of the Cu layer 42. The actual photograph is the same as FIG. 19. In FIG. 18, the actual measured value of the minimum thickness (the thickness of the portion indicated by the arrow in the photograph) of the Cu layer 42 is described in the column below the actual photograph.

As shown in FIG. 18, in Comparative Example 1, the predicted value of the minimum thickness of the Cu layer 42 was 0.199 mm, in Example 1, the predicted value of the minimum thickness of the Cu layer 42 was 0.144 mm, in Example 2, the predicted value of the minimum thickness of the Cu layer 42 was 0.195 mm, and in Example 3, the predicted value of the minimum thickness of the Cu layer 42 was 0.549 mm. As the thickness of the thinnest portion of the Cu layer 42 is smaller, the Al layer 41 is closer to the inner surface (recess 13) of the Cu layer 42, and the possibility that the Al layer 41 is exposed to the outside is greater. Therefore, it can be said that in Comparative Example in which the thickness of the thinnest portion of the Cu layer 42 is small, the Al layer 41 is likely to protrude to the outside. In addition, it has been found that in Example 3, the thickness of the thinnest portion of the Cu layer 42 is larger, and the Al layer 41 is less likely to be exposed than in the other examples.

As shown in FIG. 19, the degree of elongation of the Cu layer 42 in Example 1 was greater than that in Comparative Example 1. This is conceivably because the degree of elongation of the Al layer 41 changes depending on molding conditions (e.g., a transfer molding method, a pressing force, a difference in clearance between the molded body and the die surface, etc.), and thus the degree of elongation of the Al layer 41 in Example may be greater than that in Comparative Example. On the other hand, as shown in FIG. 18, the actual measured value of the minimum thickness of the Cu layer 42 was 0.221 mm in Example 1 and 0.199 mm in Comparative Example, which is greater in Example 1. Thus, it is conceivably difficult for the Al layer 41 to be exposed from the inner wall surface of the recess 13. The result that the actual measured value of the minimum thickness of the Cu layer 42 in Example 1 is greater than that in Comparative Example is consistent with the result of the CAE analysis.

As shown in the actual photograph of FIG. 20, ten samples (first to tenth samples) of the battery terminal of Example 1 were manufactured, and the elongation of Al and the thickness of the Cu layer 42 of each sample were measured at the shaft 21 located on the left side and the shaft 21 located on the right side with respect to the recess 23. When a circle is drawn that is tangent to the boundary between the Cu layer 42 and the Al layer 41 and has a center at a position (point) O at which the inner wall surface (the range seen on the vertical straight line in FIG. 20) of the wall of the recess 13 and the bottom (the range seen on the horizontal line and the inclined line connected to the left and right in FIG. 20) are connected to each other, the radius of the circle that is minimum is defined as the "Cu thickness". In addition, the bottom (the range seen on the horizontal line and the inclined line connected to the left and right in FIG. 20) of the recess 13 is used as a reference (reference line), and the length of the perpendicular line drawn from the lowest point of the distal end of the Al layer 41 extending downward to the reference line is defined as the "Al elongation". The measurement results of the first to fourth samples of Example 1 are shown in TABLE 4 below. The measurement results of the fifth to eighth samples of Example 1 are shown in TABLE 5 below. The measurement results of the ninth and tenth samples of Example 1 are shown in TABLE 6 below.

**TABLE 4**

| | | FIRST SAMPLE | | SECOND SAMPLE | | THIRD SAMPLE | | FOURTH SAMPLE | |
|---|---|---|---|---|---|---|---|---|---|
| | | LEFT | RIGHT | LEFT | RIGHT | LEFT | RIGHT | LEFT | RIGHT |
| ACTUAL MEASURED VALUE | Al ELONGATION (mm) | 0.99 | 1.103 | 1.059 | 1.089 | 1.095 | 1.04 | 1.156 | 1.081 |
| | Cu THICKNESS (mm) | 0.22 | 0.21 | 0.226 | 0.212 | 0.224 | 0.212 | N/A | 0.214 |
| AVERAGE VALUE | Al ELONGATION (mm) | 1.047 | | 1.074 | | 1.068 | | 1.119 | |
| | Cu THICKNESS (mm) | 0.215 | | 0.219 | | 0.218 | | 0.214 | |

As shown in TABLE 4, in the first sample shown in FIG. 21, the elongation of Al was 0.99 mm on the left side and 1.103 mm on the right side. The average elongation of Al was 1.047 mm. The thickness of Cu was 0.22 mm on the left side and 0.21 mm on the right side. The average thickness of Cu was 0.215 mm.

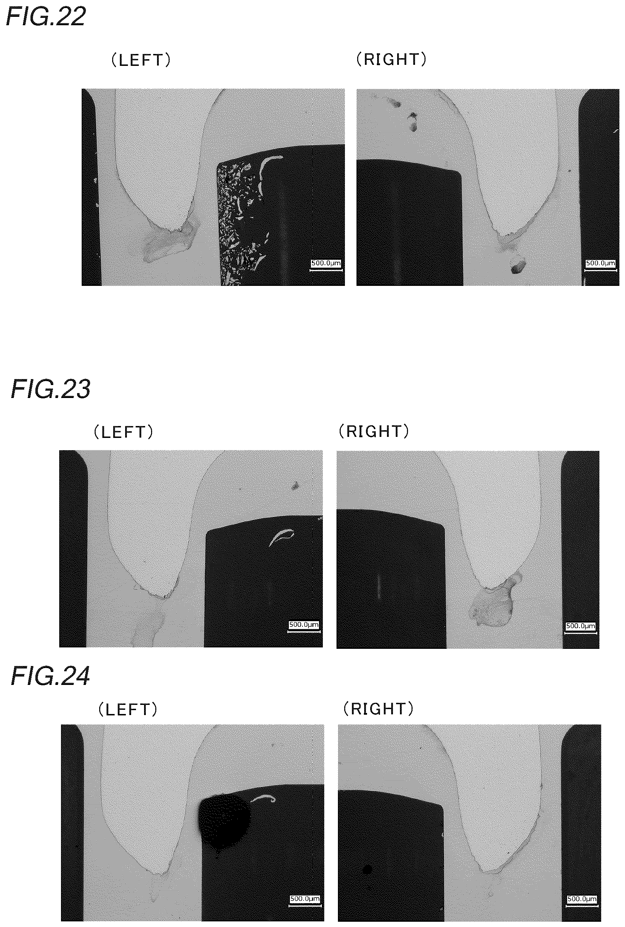

In the second sample shown in FIG. 22, the elongation of Al was 1.059 mm on the left side and 1.089 mm on the right side. The average elongation of Al was 1.074 mm. The thickness of Cu was 0.226 mm on the left side and 0.212 mm on the right side. The average thickness of Cu was 0.219 mm.

In the third sample shown in FIG. 23, the elongation of Al was 1.095 mm on the left side and 1.04 mm on the right side. The average elongation of Al was 1.068 mm. The thickness of Cu was 0.224 mm on the left side and 0.212 mm on the right side. The average thickness of Cu was 0.218 mm.

In the fourth sample shown in FIG. 24, the elongation of Al was 1.156 mm on the left side and 1.081 mm on the right side. The average elongation of Al was 1.119 mm. The thickness of Cu was N/A (not measurable) on the left side and 0.214 mm on the right side. The average thickness of Cu was 0.214 mm.

**TABLE 5**

| | | FIFTH SAMPLE | | SIXTH SAMPLE | | SEVENTH SAMPLE | | EIGHTH SAMPLE | |
|---|---|---|---|---|---|---|---|---|---|
| | | LEFT | RIGHT | LEFT | RIGHT | LEFT | RIGHT | LEFT | RIGHT |
| ACTUAL MEASURED VALUE | Al ELONGATION (mm) | 1.038 | 1.052 | 1.022 | 1.069 | 1.083 | 1 | 0.98 | 1.033 |
| | Cu THICKNESS (mm) | N/A | 0.231 | 0.229 | 0.215 | 0.221 | 0.231 | 0.227 | 0.22 |
| AVERAGE VALUE | Al ELONGATION (mm) | 1.045 | | 1.046 | | 1.042 | | 1.007 | |
| | Cu THICKNESS (mm) | 0.231 | | 0.222 | | 0.226 | | 0.2235 | |

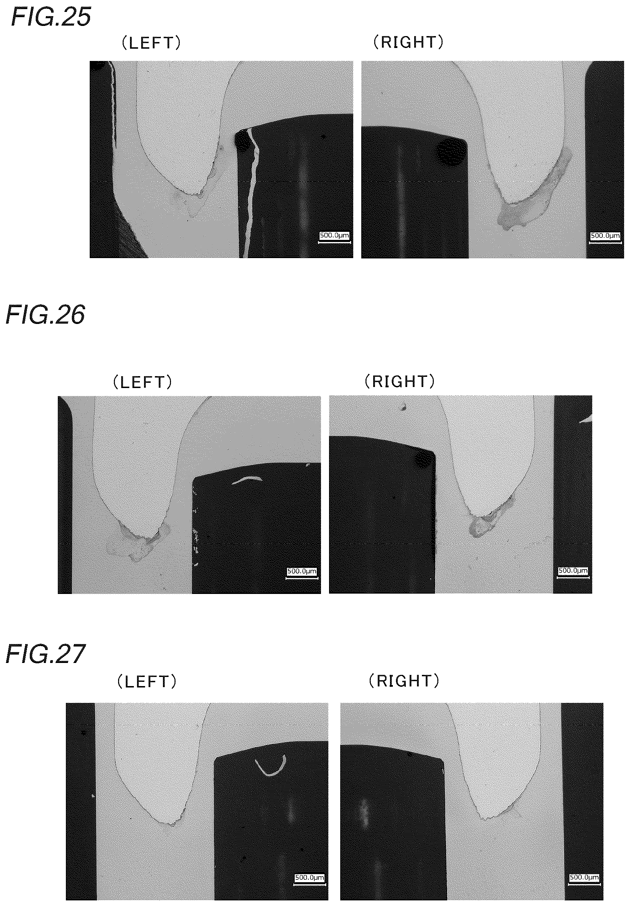

As shown in TABLE 5, in the fifth sample shown in FIG. 25, the elongation of Al was 1.038 mm on the left side and 1.052 mm on the right side. The average elongation of Al was 1.045 mm. The thickness of Cu was N/A (not measurable) on the left side and 0.231 mm on the right side. The average thickness of Cu was 0.231 mm.

In the sixth sample shown in FIG. 26, the elongation of Al was 1.022 mm on the left side and 1.069 mm on the right side. The average elongation of Al was 1.046 mm. The thickness of Cu was 0.229 mm on the left side and 0.215 mm on the right side. The average thickness of Cu was 0.222 mm.

In the seventh sample shown in FIG. 27, the elongation of Al was 1.083 mm on the left side and 1 mm on the right side. The average elongation of Al was 1.042 mm. The thickness of Cu was 0.221 mm on the left side and 0.231 mm on the right side. The average thickness of Cu was 0.226 mm.

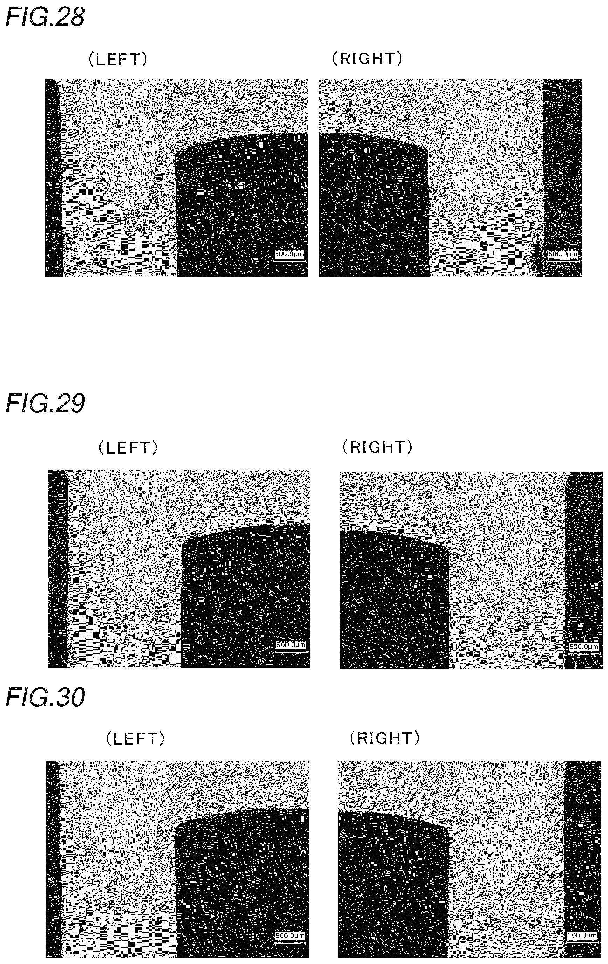

In the eighth sample shown in FIG. 28, the elongation of Al was 0.98 mm on the left side and 1.003 mm on the right side. The average elongation of Al was 1.007 mm. The thickness of Cu was 0.227 mm on the left side and 0.22 mm on the right side. The average thickness of Cu was 0.2235 mm.

**TABLE 6**

| | | NINTH SAMPLE | | TENTH SAMPLE | |
|---|---|---|---|---|---|
| | | LEFT | RIGHT | LEFT | RIGHT |
| ACTUAL MEASURED VALUE | Al ELONGATION (mm) | 1. 08 | 0.951 | 0.966 | 1.128 |
| | Cu THICKNESS (mm) | 0.222 | 0.228 | 0.224 | 0.217 |
| AVERAGE VALUE | Al ELONGATION (mm) | 1.016 | | 1.047 | |
| | Cu THICKNESS (mm) | 0.225 | | 0.2205 | |

As shown in TABLE 6, in the ninth sample shown in FIG. 29, the elongation of Al was 1.08 mm on the left side and 0.951 mm on the right side. The average elongation of Al was 1.016 mm. The thickness of Cu was 0.222 mm on the left side and 0.228 mm on the right side. The average thickness of Cu was 0.225 mm.

In the tenth sample shown in FIG. 30, the elongation of Al was 0.966 mm on the left side and 1.128 mm on the right side. The average elongation of Al was 1.047 mm. The thickness of Cu was 0.224 mm on the left side and 0.217 mm on the right side. The average thickness of Cu was 0.2205 mm.

The average Al elongation of all samples (first to tenth samples) of Example 1 described above was 1.066 mm, and the average Cu thickness of all samples (first to tenth samples) was 0.220 mm.

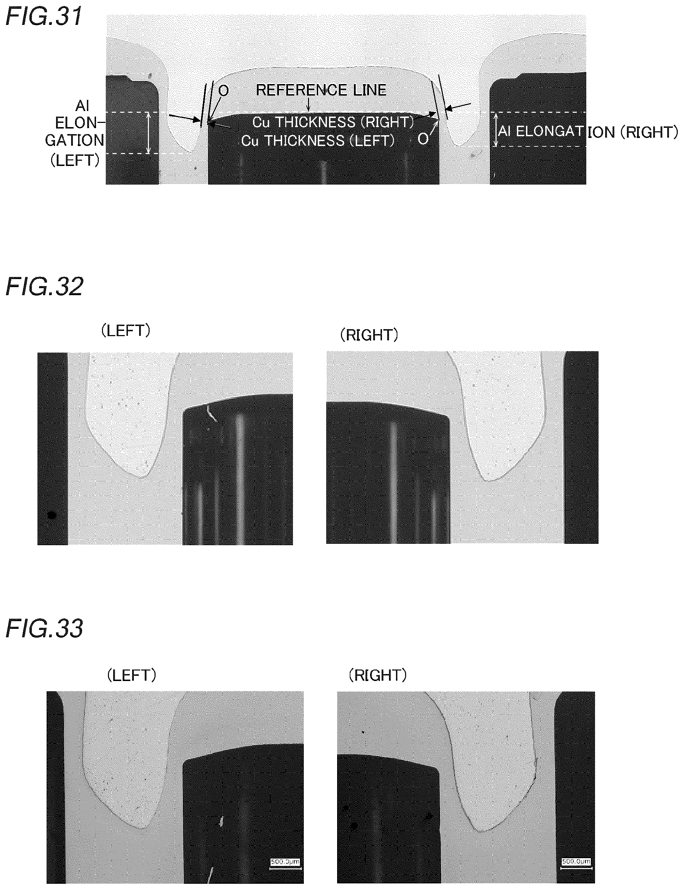

As shown in the actual photograph of FIG. 31, seven samples (first to seventh samples) of the battery terminal of Comparative Example were manufactured, and the elongation of Al and the thickness of Cu of each sample were measured on the left and right sides with respect to the recess. As in Example 1, when a circle is drawn that is tangent to the boundary between the Cu layer and the Al layer and has a center at a position (point) O at which the inner wall surface (the range seen on the vertical straight line in FIG. 31) of the wall of the recess 13 and the bottom (the range seen on the horizontal line and the inclined line connected to the left and right in FIG. 31) are connected to each other, the radius of the circle that is minimum is defined as the "Cu thickness". In addition, the bottom (the range seen on the horizontal line and the inclined line connected to the left and right in FIG. 31) of the recess 13 is used as a reference (reference line), and the length of the perpendicular line drawn from the lowest point of the distal end of the Al layer extending downward to the reference line is defined as the "Al elongation". The measurement results of the first to fourth samples of Comparative Example are shown in TABLE 7 below. The measurement results of the fifth and seventh samples of Comparative Example are shown in TABLE 8 below.

**TABLE 7**

| | | FIRST SAMPLE | | SECOND SAMPLE | | THIRD SAMPLE | | FOURTH SAMPLE | |
|---|---|---|---|---|---|---|---|---|---|
| | | LEFT | RIGHT | LEFT | RIGHT | LEFT | RIGHT | LEFT | RIGHT |
| ACTUAL MEASURED VALUE | Al ELONGATION (mm) | 1.124 | 1.12 | 1.139 | 1.059 | 1.12 | 1.096 | 1.138 | 1.061 |
| | Cu THICKNESS (mm) | 0.201 | 0.198 | 0.203 | 0.199 | 0.204 | 0.207 | 0.204 | 0.202 |
| AVERAGE VALUE | Al ELONGATION (mm) | 1.122 | | 1.099 | | 1.108 | | 1.100 | |
| | Cu THICKNESS (mm) | 0.1995 | | 0.201 | | 0.2055 | | 0.203 | |

As shown in TABLE 7, in the first sample shown in FIG. 32, the elongation of Al was 1.124 mm on the left side and 1.12 mm on the right side. The average elongation of Al was 1.122 **mm.** The thickness of Cu was 0.201 mm on the left side and 0.198 mm on the right side. The average thickness of Cu was 0.1995 mm.

In the second sample shown in FIG. 33, the elongation of Al was 1.139 mm on the left side and 1.059 mm on the right side. The average elongation of Al was 1.099 **mm.** The thickness of Cu was 0.203 mm on the left side and 0.199 mm on the right side. The average thickness of Cu was 0.201 mm.

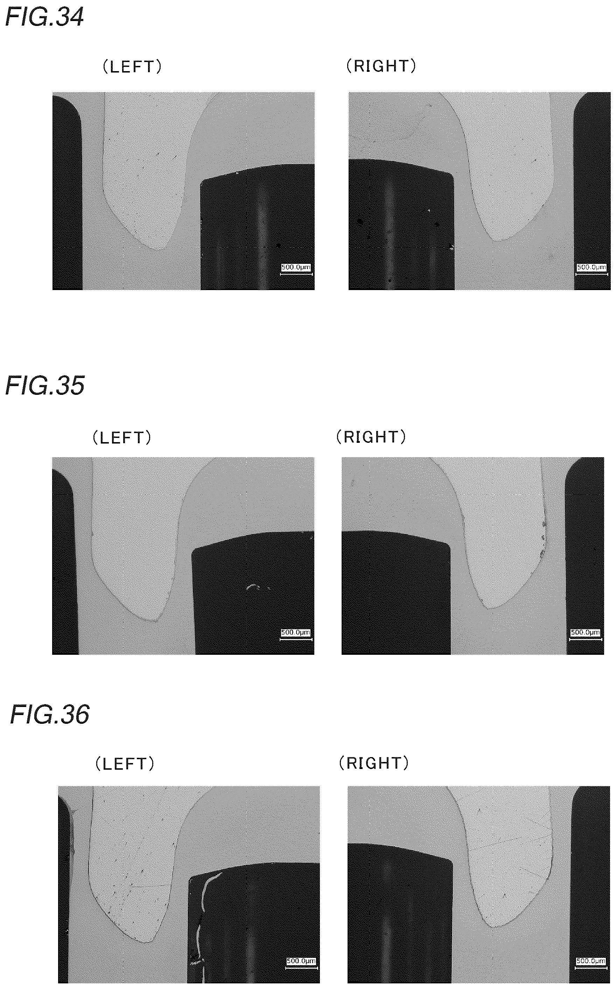

In the third sample shown in FIG. 34, the elongation of Al was 1.12 mm on the left side and 1.096 mm on the right side. The average elongation of Al was 1.108 mm. The thickness of Cu was 0.204 mm on the left side and 0.207 mm on the right side. The average thickness of Cu was 0.2055 mm.

In the fourth sample shown in FIG. 35, the elongation of Al was 1.138 mm on the left side and 1.061 mm on the right side. The average elongation of Al was 1.100 mm. The thickness of Cu was 0.204 mm on the left side and 0.202 mm on the right side. The average thickness of Cu was 0.203 mm.

**TABLE 8**

| | | FIFTH SAMPLE | | SIXTH SAMPLE | | SEVENTH SAMPLE | |
|---|---|---|---|---|---|---|---|
| | | LEFT | RIGHT | LEFT | RIGHT | LEFT | RIGHT |
| ACTUAL MEASURED VALUE | Al ELONGATION (mm) | 1.068 | 1.101 | 1.109 | 1.112 | 1.064 | 1.13 |
| | Cu THICKNESS (mm) | 0.211 | 0.205 | 0.209 | 0.208 | 0.209 | 0.209 |
| AVERAGE VALUE | Al ELONGATION (mm) | 1.085 | | 1.111 | | 1.097 | |
| | Cu THICKNESS (mm) | 0.208 | | 0.2085 | | 0.209 | |

As shown in TABLE 8, in the fifth sample shown in FIG. 36, the elongation of Al was 1.068 mm on the left side and 1.101 mm on the right side. The average elongation of Al was 1.085 mm. The thickness of Cu was 0.211 mm on the left side and 0.205 mm on the right side. The average thickness of Cu was 0.208 mm.

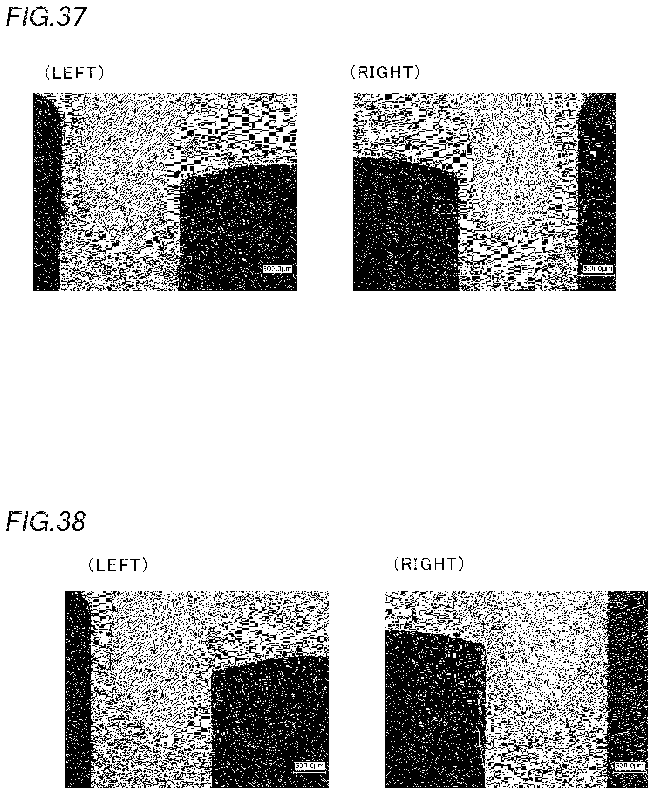

In the sixth sample shown in FIG. 37, the elongation of Al was 1.109 mm on the left side and 1.112 mm on the right side. The average elongation of Al was 1.111 mm. The thickness of Cu was 0.209 mm on the left side and 0.208 mm on the right side. The average thickness of Cu was 0.2085 mm.

In the seventh sample shown in FIG. 38, the elongation of Al was 1.064 mm on the left side and 1.13 mm on the right side. The average elongation of Al was 1.097 mm. The thickness of Cu was 0.209 mm on the left side and 0.209 mm on the right side. The average thickness of Cu was 0.209 mm. The average Al elongation of all samples was 1.194 mm, and the average Cu thickness of all samples was 0.204 mm.

The average Al elongation was larger in Comparative Example than in Example 1. A larger value of Al elongation means that the Al layer 41 is plastically flowing further in the axial direction (downward), and thus it has been found that the Al layer 41 moves further in the axial direction in Comparative Example than in Example 1. On the other hand, the average Cu thickness was larger in Example 1 than in Comparative Example. As this value is increased, the Cu layer 42 further pushes the Al layer 41 outward, or further resists the inward plastic flow of the Al layer 41, and thus a larger average Cu thickness means that the possibility that the Al layer 41 is exposed on the inner wall surface of the recess 13 is reduced. Therefore, it has been found that the Al layer 41 is less likely to be exposed from the recess 13 in Example 1 than in Comparative Example. In other words, it has been found that the Al layer 41 is less likely to move downward and is less likely to be exposed in Example 1 than in Comparative Example.

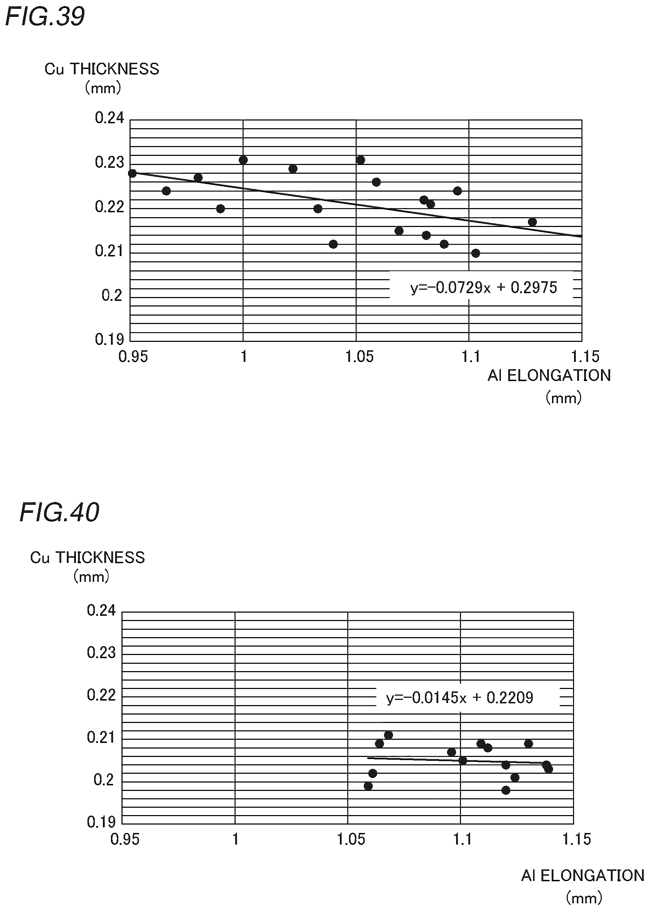

FIG. 39 shows a graph plotting the measurement results of the first sample to the tenth sample of Example 1. The graph shown in FIG. 39 plots Cu thickness on the vertical axis and Al elongation on the horizontal axis. The slope of the graph is y = -0.0729x + 0.2975. As shown in this graph, it has been confirmed that the Cu thickness decreases with increasing the Al elongation by cross-sectional measurement of the actual molded body (terminal component) of Example using A3003, and it has been found that in the case of A3003, it can be said that the Cu thickness increases as the Al elongation decreases.

FIG. 40 shows a graph plotting the measurement results of the first to seventh samples of Comparative Example. The graph shown in FIG. 40 plots Cu thickness on the vertical axis and Al elongation on the horizontal axis. The slope of the graph is y = -0.0145x + 0.2209. As shown in this graph, it has been confirmed that the Cu thickness hardly changes even when the Al elongation increases by cross-sectional measurement of the actual molded body (terminal component) using A1050 of Comparative Example, and it has been found that in the case of A1050, it cannot be said that the Cu thickness increases as the Al elongation decreases.

From the actual measurement results shown in FIGS. 20 to 40 and the CAE simulation results, it has been found that A3003 can reduce Al elongation more than A1050. Therefore, as compared with A1050, A3003 can suppress Al elongation to be small, and as the Al elongation decreases, the Cu thickness increases, and thus the inventors of the present application have found that it can be said that A3003 is highly likely to ensure a sufficient Cu thickness.

### Modified Examples

The embodiment and Examples (simulations) disclosed this time must be considered as illustrative in all points and not restrictive. The scope of the present invention is not shown by the above description of the embodiment and Examples but by the scope of claims for patent, and all modifications (modified examples) within the meaning and scope equivalent to the scope of claims for patent are further included.

For example, while an example of the battery terminal using the clad material including the Cu layer made of Cu (pure copper) has been shown in the aforementioned embodiment, the present invention is not limited to this. In the present invention, for example, the battery terminal may use a clad material including a Cu layer made of a Cu alloy.

### Description of Reference Numerals

1: lithium-ion battery (battery)
2: lid member (housing)
3: tank member (housing)
4a: positive electrode (positive electrode component)
4b: negative electrode (negative electrode component)
4c: separator
5: negative electrode current collector (negative electrode component)
6: positive electrode current collector (positive electrode component)
10: negative electrode terminal (battery terminal)
11: shaft
12: flange
13: recess
40: clad material
41: Al layer
42: Cu layer
51: press blank

## Claims

1. A battery terminal (10) comprising:
a flange (12) in which an Al layer (41) made of an Al alloy containing a highest content of Al and a second highest content of Mn or Mg and having a conductivity of 30% IACS or more, and a Cu layer (42) made of Cu are diffusion bonded to each other in a stacking direction;
a shaft (11) extending from the flange in the stacking direction of the Al layer and the Cu layer; and
a recess (13) at an end of the shaft on a side of the Cu layer, including a surface composed of the Cu layer.

2. The battery terminal according to claim 1, wherein the Al alloy has a conductivity of 40% IACS or more.

3. The battery terminal according to claim 1 or 2, wherein the Al alloy contains the highest content of Al and the second highest content of Mn.

4. A method for manufacturing a battery terminal (10), the method comprising:
preparing a clad material (40) by diffusion bonding an Al layer (41) made of an Al alloy containing a highest content of Al and a second highest content of Mn or Mg and having a conductivity of 30% IACS or more and a Cu layer (42) made of Cu to each other in a stacking direction;
tempering the clad material into a press blank (51) that is a material to be pressed, in which the Al layer having a Vickers hardness of 30 HV or more and the Cu layer having a Vickers hardness of 50 HV or more and 80 HV or less are diffusion bonded to each other in the stacking direction; and
pressing the press blank to form a flange (12), a shaft (11) extending from the flange in the stacking direction of the Al layer and the Cu layer, and a recess (13) at an end of the shaft on a side of the Cu layer, including a surface composed of the Cu layer.

5. The method for manufacturing a battery terminal according to claim 4, wherein the tempering the clad material into the press blank includes tempering the Al layer to have a Vickers hardness of 30 HV or more and 75 HV or less, and tempering the Cu layer to have a Vickers hardness of 50 HV or more and 80 HV or less.

6. The method for manufacturing a battery terminal according to claim 4 or 5, wherein the preparing the clad material includes preparing the clad material by diffusion bonding the Al layer made of the Al alloy having a conductivity of 40% IACS or more and the Cu layer made of Cu to each other in the stacking direction.

7. A battery (1) comprising:
a battery terminal (10) including a flange (12) in which an Al layer (41) made of an Al alloy containing a highest content of Al and a second highest content of Mn or Mg and having a conductivity of 30% IACS or more, and a Cu layer (42) made of Cu are diffusion bonded to each other in a stacking direction, a shaft (11) extending from the flange in the stacking direction of the Al layer and the Cu layer, and a recess (13) at an end of the shaft on a side of the Cu layer, including a surface composed of the Cu layer;
an electrolyte;
a housing (2) to store the electrolyte;
a positive electrode component (4a, 6) included in a positive electrode side of the battery;
a negative electrode component (4b, 5) included in a negative electrode side of the battery; and
a separator (4c) to separate a positive electrode from a negative electrode of the battery; wherein
the recess of the battery terminal is swaged and fixed to the negative electrode component.

8. A method for manufacturing a battery, the battery including a battery terminal (10) including a flange (12) in which an Al layer (41) made of an Al alloy containing a highest content of Al and a second highest content of Mn or Mg and having a conductivity of 30% IACS or more, and a Cu layer (42) made of Cu are diffusion bonded to each other in a stacking direction, a shaft (11) extending from the flange in the stacking direction of the Al layer and the Cu layer, and a recess (13) at an end of the shaft on a side of the Cu layer, including a surface composed of the Cu layer, an electrolyte, a housing (3) to store the electrolyte, a positive electrode component (4a, 6) included in a positive electrode side of the battery, a negative electrode component (4b, 5) included in a negative electrode side of the battery, and a separator (4c) to separate a positive electrode from a negative electrode of the battery, the method comprising:
swaging and fixing the recess of the battery terminal to the negative electrode component.
